# EUROPEAN PATENT SPECIFICATION

(11) **EP 4 261 101 B1**
(45) Date of publication and mention of the grant of the patent: **08.07.2026**
(21) Application number: 20964918.5
(22) Date of filing: 25.12.2020
(51) Int. Cl.: B61F 5/52, B61F 5/30

(54) **BOGIE AND RAIL VEHICLE**
DREHGESTELL UND SCHIENENFAHRZEUG
BOGIE ET VÉHICULE FERROVIAIRE

(30) Priority: 09.12.2020 CN 202011429611
(43) Date of publication of application: 18.10.2023
(73) Proprietor: CRRC TANGSHAN CO., LTD., Fengrun District Tangshan Hebei 063035 (CN)
(72) Inventor: ZHANG, Xiaojun, Tangshan, Hebei 063035 (CN); CHEN, Yanhong, Tangshan, Hebei 063035 (CN); QIN, Chengwei, Tangshan, Hebei 063035 (CN); WANG, Junfeng, Tangshan, Hebei 063035 (CN); CHU, Bogang, Tangshan, Hebei 063035 (CN); ZHANG, Wenzhao, Tangshan, Hebei 063035 (CN)
(74) Representative: dompatent
(86) International application number: PCT/CN2020/139404
(87) International publication number: WO 2022/120989

(56) References cited:
- EP-A1- 0 965 512
- EP-A1- 0 983 922
- EP-A1- 0 983 922
- CN-A- 107 532 671
- CN-A- 110 753 651
- CN-A- 111 976 776
- CN-A- 111 994 113
- CN-A- 112 519 820
- CN-A- 112 519 821
- CN-A- 112 519 827
- CN-A- 112 537 334
- CN-U- 205 203 030
- CN-U- 210 707 409
- CN-U- 211 943 323
- US-B2- 9 376 127

## Description

### TECHNICAL FIELD

The present disclosure relates to railway vehicle operation technology, more particularly to a bogie frame and a railway vehicle.

### BACKGROUND

Railway vehicle is an important transportation connecting cities and has gradually become the main transportation in cities. Railway vehicle is also the main carrier for cargo transportation. The railway vehicle mainly includes a car body and a bogie frame disposed below the car body. The bogie frame is employed to carry the load on the car body and realize running and steering functions.

The bogie frame includes a frame, a wheelset, a traction device, a buffer device and other structures, in which the frame includes two sidebeams extended along the longitudinal direction of the vehicle and a crossbeam connecting the two sidebeams, and the connection between the crossbeam and the sidebeam can have varies types. After studying various types of bogie frames, technicians find that there are some technical defects in conventional bogie frames, such as large dead weight, which leads to large wheelset force, large wheel-rail wear, and large noise. The rigid connection of the frame leads to poor vibration reduction ability, which leads to large vibration and poor riding comfort. The wheel unloading rate is large thereby low safety. Poor anti-rollover ability makes the carriage prone to rollover, insufficient vertical buffering ability leads to poor vibration of the carriage, poor riding comfort, high dead weight leads to low traction efficiency, and unreasonable installation layout of components leads to low assembly efficiency. CN110753651A discloses a bogie frame including a cross beam extending in a car width direction and including a car width direction middle portion at which a center pin arrangement space is formed. The cross beam includes a pair of pipe members extending in the car width direction and lined up, so as to be located away from each other in a car longitudinal direction, and air spring seats provided at upper surfaces of car width direction end portions of the pair of pipe members. At least one of the pair of pipe members includes a curved portion at a car width direction middle portion thereof, the curved portion projecting outward in the car longitudinal direction such that a clearance between the pair of pipe members increases. The center pin arrangement space is formed between the pair of pipe members by the curved portion.

### SUMMARY

The embodiment of the present disclosure provides a bogie frame and a railway vehicle.

A first aspect of the embodiment of the present disclosure provides a bogie frame including:
a crossbeam, extended transversely and including two crossbeam single-structures symmetrically disposed and connected with each other and forming a traction device mounting space between the two crossbeam single-structures;
two secondary suspension mounting seats, symmetrically disposed on the top surface of the crossbeam, wherein a mounting channel passing through along the longitudinal direction is formed between the secondary suspension mounting seat and the crossbeam, and the longitudinal direction and transverse direction are two horizontal directions perpendicular to each other;
two sidebeams, extended in the longitudinal direction, wherein the two sidebeams are disposed side-by-side, and each of the sidebeams is disposed in one of the mounting channel;
wheelset, symmetrically disposed below the sidebeam and including an shaft, wheels symmetrically disposed on the shaft, and shaft boxes symmetrically disposed on the shaft;
a primary suspension device, disposed between the sidebeam and the shaft box;
a secondary suspension device, disposed on the secondary suspension mounting seat;
a traction device, the bottom end thereof inserted in the traction device mounting space between the two crossbeam single-structures; and
a brake device, disposed on the crossbeam and is employed to apply braking operation on the wheels.

A second aspect of the embodiment of the present disclosure provides a railway vehicle including a bogie frame as described above.

The bogie frame provided by the embodiment of the present disclosure includes a crossbeam extended along the transverse direction, wherein the crossbeam includes two crossbeam single-structures symmetrically disposed and connected with each other and a traction device mounting space is formed between the two crossbeam single-structures; a secondary suspension mounting seat disposed on the top surface of the crossbeam and forming a mounting channel with the crossbeam along the longitudinal direction; a sidebeam extended along the longitudinal direction and disposed in the mounting channel; wheelset symmetrically disposed below the sidebeam; a first suspension device disposed between the sidebeam and the shaft box; a secondary suspension device is disposed on the secondary suspension mounting seat, wherein the bottom end of the traction device is inserted in the traction device mounting space between the two crossbeam single-structures; and a brake device disposed on the crossbeam for applying braking operation on the wheels. And the weight load of the car body is transmitted to the wheelset through the secondary suspension device, the secondary suspension mounting seat and the sidebeam. The structure of the bogie frame provided by the embodiment is different from the conventional bogie frame. Compared with the conventional structure in which the crossbeam and the sidebeam are integrated, the crossbeam and the sidebeam provided by the embodiment are independent structures, have small volume, are easy to produce, transport and assemble, and can improve the assembly efficiency.

### BRIEF DESCRIPTION OF THE DRAWINGS

The drawings illustrated herein serve to provide a further understanding of and constitute a part of the present disclosure, and the illustrative embodiments of the present disclosure and the description thereof are used to explain the present disclosure and are not unduly limiting. In the drawings:
Fig. 1 is a perspective view of a bogie frame provided by an embodiment of the present disclosure.
Fig. 2 is a structural schematic view of the crossbeam, the sidebeam, and the secondary suspension mounting seat of the bogie frame provided by the embodiment of the present disclosure.
Fig. 3 is a perspective view of the crossbeam provided by the embodiment of the present disclosure.
Fig. 4 is a perspective view of a crossbeam single-structure provided by the embodiment of the present disclosure.
Fig. 5 is a sectional view of the crossbeam provided by the embodiment of the present disclosure.
Fig. 6 is a partially enlarged view of area A in Fig. 5.
Fig. 7 is an exploded view of two connected beam single-structures provided by the embodiment of the present disclosure.
Fig. 8 is a perspective view of the sidebeam provided by the embodiment of the present disclosure.
Fig. 9 is a front view of the sidebeam provided by the embodiment of the present disclosure.
Fig. 10 is another front view of the sidebeam provided by the embodiment of the present disclosure.
Fig. 11 is a schematic view of the sidebeam provided in the embodiment bearing a first vertical load.
Fig. 12 is a schematic view of the sidebeam provided in the embodiment bearing a second vertical load.
Fig. 13 is an exploded view of the crossbeam, the sidebeam and the secondary suspension mounting seat of the bogie frame provided by the embodiment of the present disclosure.
Fig. 14 is a top perspective view of the secondary suspension mounting seat provided by the embodiment of the present disclosure.
Fig. 15 is a bottom perspective view of the secondary suspension mounting seat provided by the embodiment of the present disclosure.
Fig. 16 is a partially sectional view of the assembly of the secondary suspension mounting seat, the sidebeam, and the crossbeam provided by the embodiment of the present disclosure.
Fig. 17 is a structural schematic view of the bogie frame disposed with the secondary suspension device provided by the embodiment of the present disclosure.
Fig. 18 is a structural schematic view of wheelset of the bogie frame provided by the embodiment of the present disclosure.
Fig. 19 is a partial schematic view of the bogie frame disposed with the safety stopper device provided by the embodiment of the present disclosure.
Fig. 20 is a sectional view of the bogie frame disposed with the safety stopper device provided by the embodiment of the present disclosure.
Fig. 21 is a structural schematic view of the safety stopper device provided by the embodiment of the present disclosure.
Fig. 22 is an exploded view of the assembly of the safety stopper device, the primary suspension, and the shaft box provided by the embodiment of the present disclosure.
Fig. 23 is a perspective view of the brake hanging bracket of the bogie frame provided by the embodiment of the present disclosure.
Fig. 24 is a schematic view of the connection between the brake hanging bracket and the crossbeam provided by the embodiment of the present disclosure.
Fig. 25 is an exploded view of the connection between the brake hanging bracket and the crossbeam provided by the embodiment of the present disclosure.
Fig. 26 is a sectional view of the connection between the brake hanging bracket and the crossbeam provided by the embodiment of the present disclosure.
Fig. 27 is a perspective schematic view of the connection between the crossbeam and the vertical vibration damper provided by the embodiment of the present disclosure.
Fig. 28 is an enlarged schematic view of area B in Fig. 27.
Fig. 29 is an exploded schematic view of the connection between the crossbeam and the vertical vibration damper provided by the embodiment of the present disclosure.
Fig. 30 is a schematic view of the arranged position of the vertical vibration damper on the bogie frame provided by the embodiment of the present disclosure.
Fig. 31 is a perspective view of an anti-roll torsion bar provided by the embodiment of the present disclosure.
Fig. 32 is a structural schematic view of the crossbeam connected with the shaft box by a tension-only rod provided by the embodiment of the present disclosure.
Fig. 33 is a perspective schematic view of the connection of the traction center pin, the longitudinal stopper and the crossbeam provided by the embodiment of the present disclosure.
Fig. 34 is a schematic sectional view of the connection of the traction center pin, the longitudinal stopper and the crossbeam provided by the embodiment of the present disclosure.
Fig. 35 is a perspective schematic view of the connection between the traction center pin and the longitudinal stopper provided by the embodiment of the present disclosure.
Fig. 36 is a structural schematic view of the traction center pin provided by the embodiment of the present disclosure.
Fig. 37 is an exploded schematic view of the traction center pin provided by the embodiment of the present disclosure.
Fig. 38 is a perspective schematic view of the connection between the traction center pin and the crossbeam provided by the embodiment of the present disclosure.
Fig. 39 is a perspective schematic view of the connection between the traction center pin and the transverse vibration damper provided by the embodiment of the present disclosure.
Fig. 40 is a front view of the connection between the traction center pin and the transverse vibration damper provided by the embodiment of the present disclosure.
Fig. 41 is an enlarged schematic view of area C in Fig. 34.
Fig. 42 is a sectional view of the connection between the traction center pin and the transverse vibration damper provided by the embodiment of the present disclosure.
Fig. 43 is an enlarged schematic view of area D in Fig. 42.
Fig. 44 is a perspective view of the powered bogie frame provided by the embodiment of the present disclosure.
Fig. 45 is a schematic view of the connection between the direct drive motor and the shaft provided by the embodiment of the present disclosure.
Fig. 46 is a sectional view of the direct drive motor and the shaft provided by the embodiment of the present disclosure.
Fig. 47 is a partially enlarged schematic view of area E of Fig. 46.
Fig. 48 is a perspective schematic view of a motor balancing link provided by the embodiment of the present disclosure.
Fig. 49 is a sectional view of the connection between a rod body and a joint of a motor balancing link provided by the embodiment of the present disclosure.
Fig. 50 is an exploded schematic view of the motor balancing link provided by the embodiment of the present disclosure.
Fig. 51 is a structural schematic view of the connection between the secondary suspension mounting seat and the traction motor by the motor balancing link provided by the embodiment of the present disclosure.
Fig. 52 is a schematic view of a bogie frame chamber and mounting of the bogie frame of a railway vehicle according to the embodiment of the present disclosure.
Fig. 53 is a schematic view of the bogie frame chamber shown in Fig. 52.
Fig. 54 is an exploded schematic view of the main chamber plate and the side chamber plate of the bogie frame chamber shown in Fig. 53.
Fig. 55 is an exploded view of the connecting structure of the main chamber plate and the side chamber plate shown in Fig. 54.
Fig. 56 is an assembly view of the connecting structure of the main chamber plate and the side chamber plate shown in Fig. 55.
Fig. 57 is a schematic view of the anti-rotation seat of the bogie frame chamber shown in Fig. 54.
Fig. 58 is a partially enlarged view of the bogie frame chamber shown in Fig. 53.
Fig. 59 is a partially enlarged view of the bogie frame chamber shown in Fig. 58.
Fig. 60 is an exploded schematic view of the side chamber plate and the first connecting frame of the bogie frame chamber shown in Fig. 53.
Fig. 61 is an exploded view of the connecting structure of the side chamber plate, the first connecting frame, and the second connecting frame shown in Fig. 59.
Fig. 62 is an exploded schematic view of the connection between the side chamber plate connecting rod of the first connecting frame and the primary spring fixing seat of the bogie frame.
Fig. 63 is an exploded schematic view of the connection between the brake hanging bracket connecting rod of the second connecting frame and the brake device hanging bracket of the bogie frame.
Fig. 64 is an exploded schematic view of the connection between the crossbeam connecting rod of the second connecting frame and the crossbeam of the bogie frame.
Fig. 65 is a perspective view of the first connecting frame of the bogie frame chamber shown in Fig. 53.
Fig. 66 is a perspective view of the second connecting frame of the bogie frame chamber shown in Fig. 54.

### REFERENCES IN THE DRAWINGS:

1-sidebeam; 11-main sidebeam plate; 111-main plate middle section; 112-main plate transition section; 113-main plate connection section; 12-auxiliary sidebeam plate; 121-auxiliary plate middle section; 122-auxiliary plate transition section; 123-auxiliary plate connection section; 13-elastic stopper; 14-buffer gap; 15-first sidebeam positioning pin; 16-second sidebeam positioning pin; 17-third sidebeam positioning pin; 18-positioning metal member;
2-crossbeam; 21-crossbeam main body; 210-first pin hole; 211-sidebeam positioning pin hole; 212-secondary mounting platform; 2121-secondary bolt hole; 2122-secondary positioning hole; 213-brake bolt hole; 214-vertical vibration damper mounting lug; 215-anti-roll torsion bar mounting portion; 216-anti-yaw damper mounting plate; 217-tension-only rod connecting portion; 218-center pin connecting portion; 219-nameplate mounting portion; 22-crossbeam connecting arm; 23-crossbeam connecting pin; 24-crossbeam connecting flange; 25-crossbeam connecting joint; 26-crossbeam connecting gasket; 27-crossbeam mounting ring; 28-crossbeam connecting bolt; 29-mounting lug; 291-limiting surface;
3-wheelset; 31-shaft; 32-wheel; 33-shaft box; 331-primary positioning hole; 332-limiting recess; 333-seal bearing;
4-primary suspension device; 41-primary suspension mounting seat; 411-lower mounting seat; 412-upper mounting seat; 42-primary suspension; 43-wheelset lift; 431-limiting stopper protrusion; 432-connecting arm; 441-lower pad plate; 442-upper pad plate;
5-safety stopper device; 51-safety stopper seat; 52-safety stopper;
6-traction center pin; 61-center pin main body; 61a-stopper contact area; 61b-mating hole; 62-mounting arm; 63-limiting surface; 64-lift; 641-lift mounting main body; 642-lift stopper block; 643-second adjusting gasket; 65-longitudinal stopper; 651-first adjusting gasket; 652-stopper main body; 653-mounting flange; 654-stopper fixing bolt;
7-brake hanging bracket; 71-brake crossbeam connecting hole; 72-brake crossbeam connecting bolt; 73-brake hanging bracket liner; 74-brake device mounting hole; 75-chamber mounting hole;
8-secondary suspension mounting seat; 81-mounting seat top plate; 82-mounting seat side plate; 83-mounting seat connecting portion; 84-mounting seat bolt hole; 85-mounting seat positioning protrusion; 86-sidebeam positioning counterbore; 871-lower transition plate; 872-upper transition plate; 88-secondary mounting portion; 89-motor mounting portion; 810-air spring;
91-traction motor; 911-stator; 912-end cap; 912a-gear groove; 913-rotor; 92-motor balancing link; 921-link body 922-joint; 923-metal retaining ring; 923a-positioning protrusion; 923b-slot; 924-spring collar; 925-dustproof retaining ring; 931-mounting body; 932-extension ring; 933-annular seal gear; 93-vertical vibration damper; 94-first fixing bolt; 941-first bolt head; 942-first side plane; 943-first screw; 944-first adjusting gasket; 945-first nut; 95-anti-roll torsion bar; 951-transverse torsion bar; 952-vertical torsion bar; 953-torsion bar joint; 954-torsion bar mounting member; 96-anti-yaw damper; 97-tension-only rod; 971-rod joint; 98-transverse vibration damper; 99-second fixing bolt; 991-second bolt head; 992-second side plane; 993-second screw; 994-third adjusting gasket; 995-second nut;
101-bogie frame; 102-bogie frame chamber; 1021-main chamber plate, 10211-main chamber plate through hole, 10212-main chamber plate mounting seat body; 10213-chamber plate connecting rod mounting seat; 1022-side chamber plate; 10221-side chamber plate through hole; 10222- anti-rotation protruding seat; 1023-sound-absorbing plate; 1024-first anti-rotation bolt; 10241-first anti-rotation platform; 10251-first anti-rotation nut; 1026-anti-rotation seat, 10261-anti-rotation protruding bar, 10262-anti-rotation recess, 1027-first anti-rotation flexible strip; 1031-first connecting frame; 10311-side chamber plate connecting rod; 10311a-primary fixing seat interface; 10312-main chamber plate connecting rod; 10313-first connecting frame reinforcing rod; 1032-second connecting frame; 10321-brake hanging bracket connecting rod; 10321a-brake hanging bracket interface; 10322-crossbeam connecting rod; 10322a-crossbeam interface; 10323-second connecting frame reinforcing rod; 1033-anti-rotation indenting seat; 1034-second anti-rotation bolt; 10341-second anti-rotation platform; 10351-second anti-rotation nut; 1036-second anti-rotation flexible strip; 1041-fixing bolt; 1042-fixing nut; 1043-gasket; 1044-rubber joint.

### DETAILED DESCRIPTION OF THE EMBODIMENTS

The present embodiment provides a bogie frame which can be applied to a railway vehicle and is disposed below a carriage of the railway vehicle. The railway vehicle can be a diesel locomotive or electric locomotive, EMUs, subway, light rail or tram, etc., and can be a passenger vehicle or freight vehicle. In the embodiment, the length direction of the carriage is defined as a longitudinal direction, the width direction of the carriage is defined as a transverse direction, and the high direction is referred to as a vertical or upright direction.

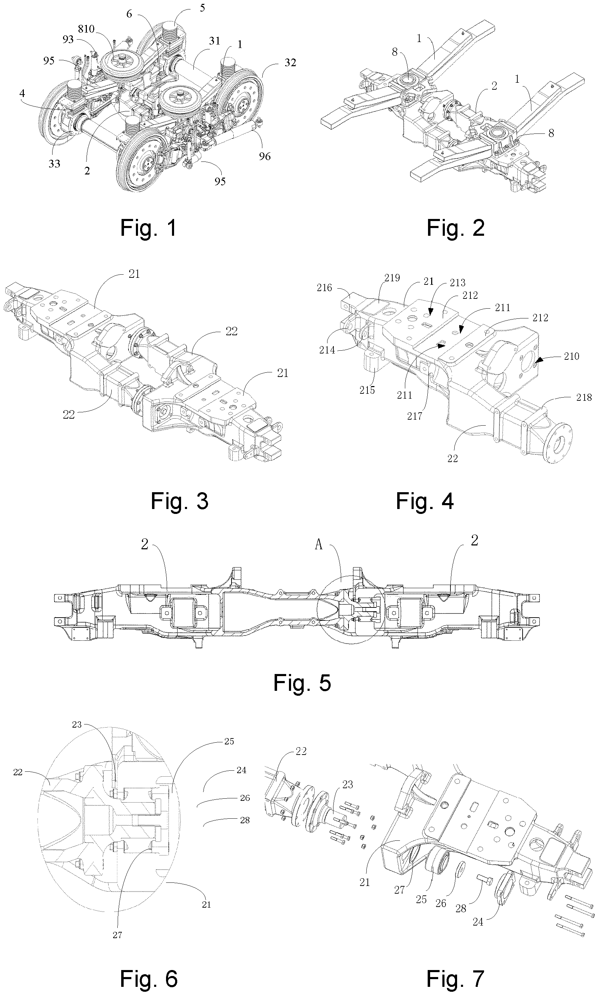

Fig. 1 is a perspective view of a bogie frame provided by an embodiment of the present disclosure. Fig. 2 is a structural schematic view of the crossbeam, the sidebeam, and the secondary suspension mounting seat of the bogie frame provided by the embodiment of the present disclosure. As shown in Fig. 1 and Fig. 2, the bogie frame provided in the embodiment includes a sidebeam 1, a crossbeam 2, a wheelset 3, a primary suspension device 4, a secondary suspension mounting seat 8, a secondary suspension device, a traction device, and a brake device. The crossbeam 2 is extended in the transverse direction. The crossbeam 2 is extended transversely and includes two crossbeam single-structures symmetrically disposed and connected with each other and forming a traction device mounting space between the two crossbeam single-structures. The number of the secondary suspension mounting seats 8 is two, which are symmetrically disposed on the top surface of the crossbeam 3, and two mounting channels passing through along the longitudinal direction are formed between the secondary suspension mounting seats 8 and the crossbeam 2. The sidebeams 1 are extended in the longitudinal direction, the two sidebeams 1 are disposed side-by-side, and each of the sidebeams 1 is disposed in one of the mounting channels.

The wheelset 3 is symmetrically disposed below the sidebeam and includes a shaft, wheels symmetrically disposed on the shaft, and shaft boxes symmetrically disposed on the shaft; The primary suspension device 4 is disposed between the sidebeam 1 and the shaft box for cushioning the vertical force between the sidebeam 1 and the wheelset 3. The secondary suspension device is disposed on the secondary suspension mounting seat 8, the top of which is connected to the bottom of the carriage, and is employed to buffering the vertical force between the carriage and the bogie frame.

The bottom end of the traction device is inserted in the traction device mounting space between the two crossbeam single-structures, and the top end of the traction device is connected with the bottom of the carriage for transmitting longitudinal traction or braking force between the carriage and the bogie frame. The brake device is disposed on the crossbeam 2 and is employed to apply braking operation on the wheels.

The bogie frame provided by the embodiment of the present disclosure includes a crossbeam extended along the transverse direction, wherein the crossbeam includes two crossbeam single-structures symmetrically disposed and connected with each other and a traction device mounting space is formed between the two crossbeam single-structures; a secondary suspension mounting seat disposed on the top surface of the crossbeam and forming a mounting channel with the crossbeam along the longitudinal direction; a sidebeam extended along the longitudinal direction and disposed in the mounting channel; wheelset symmetrically disposed below the sidebeam; a first suspension device disposed between the sidebeam and the shaft box; a secondary suspension device is disposed on the secondary suspension mounting seat, wherein the bottom end of the traction device is inserted in the traction device mounting space between the two crossbeam single-structures; and a brake device disposed on the crossbeam for applying braking operation on the wheels. And the weight load of the car body is transmitted to the wheelset through the secondary suspension device, the secondary suspension mounting seat, and the sidebeam. The structure of the bogie frame provided by the embodiment is different from the conventional bogie frame. Compared with the conventional structure in which the crossbeam and the sidebeam are integrated, the crossbeam and the sidebeam provided by the embodiment are independent structures, have small volume, are easy to produce, transport, and assemble, and can improve the assembly efficiency.

On the basis of the above technical proposal, the embodiment provides a specific implemented mode of the bogie frame: Fig. 3 is a perspective view of the crossbeam provided by the embodiment of the present disclosure. Fig. 4 is a perspective view of a crossbeam single-structure provided by the embodiment of the present disclosure. As shown in Figs. 3 and 4, the crossbeam 2 includes two crossbeam single-structures disposed sequentially in the transverse direction and connected with each other to form one crossbeam.

The crossbeam single-structure includes a crossbeam main body 21 and a crossbeam connecting arm 22 both of which extended in the transverse direction. An inner end surface of the crossbeam main body 21 facing the other crossbeam main body 21 has a first mounting area and a second mounting area. One end of the crossbeam connecting arm 22 is fixed to the first mounting area and the other end is connected to the second mounting area in the other crossbeam single-structure 2 by a crossbeam connecting device.

The crossbeam main body 21 is assembled with the sidebeams 1 to form a frame of the bogie frame and serves as a main body member of the bogie frame. Specifically, a sidebeam mounting interface for assembling the sidebeam 1 is provided on the middle top surface of the crossbeam main body 21, and the sidebeam is located above the crossbeam main body 21. The crossbeam 2 is made of cast aluminum alloy or other lightweight materials, and the casting mold can be made by additive manufacturing technology to reduce the weight.

As shown in Fig. 4, the width of the end portion of the crossbeam main body 21 facing the other crossbeam single-structure is larger than the width of the middle portion of the crossbeam main body 21. The end surface of the crossbeam main body 21 facing the other crossbeam single-structure is defined as an inner end surface, and the first mounting area and the second mounting area are respectively located on the inner end surface of the crossbeam main body 21, specifically arranged at two ends along the width direction of the inner end surface. The distance between the first mounting area and the second mounting area is remained, so that there is a gap between the two crossbeam connecting arms 22 for receiving a traction center pin of the bogie frame traction device. The top of the traction center pin is connected to the car body, and the bottom of the traction center pin is inserted into the gap between the two crossbeam connecting arms 22 to transmit traction or braking force with the crossbeam.

For the connection between the two crossbeam single-structures, a rigid connection can be employed, for example by bolting the crossbeam connecting arm 22 to the other crossbeam main body 21. Or the following mode provided by the embodiment can be adopted:

In an implementation mode: a crossbeam connecting pin is adopted, and two ends along the axial direction of the crossbeam connecting pin are respectively defined as a first end and a second end. The first end is connected to the crossbeam connecting arm 22, and the second end is inserted and fixed in the first pin hole opened in the second mounting area. The first end of the crossbeam connecting pin and the crossbeam connecting arm 22 can be bolted, welded, pressed, and installed, and the second end fixed in the second pin hole can be welded, pressed, and installed or bolted through gaskets.

Another implementation mode: Fig. 5 is a sectional view of the crossbeam provided by the embodiment of the present disclosure, Fig. 6 is a partially enlarged view of the area A in Fig. 5, and Fig. 7 is an exploded view of the two crossbeams connected by the embodiment of the present disclosure. As shown in Figs. 5 to 7, the crossbeam connecting device includes a crossbeam connecting pin 23, a crossbeam connecting flange 24, a crossbeam connecting joint 25, and a crossbeam connecting gasket 26. The crossbeam connecting joint 25 has an annular structure, is press-fitted in the first pin hole 210, and is relatively fixed to the crossbeam main body 21. In Fig. 6, the axial direction of the crossbeam connecting joint 25 is extended in the left-right direction, the left end thereof is defined as a first end and the right end as a second end.

The second end of the crossbeam connecting pin 23 is press-fitted in the crossbeam connecting joint 25 and is relatively fixed to the crossbeam connecting joint 25. The crossbeam connecting gasket 26 is provided at the second end surface of the crossbeam connecting pin 23 and is coaxial with the crossbeam connecting pin 23. The outer diameter of the crossbeam connecting gasket 26 is larger than the inner diameter of the crossbeam connecting joint 25, and the inner diameter of the crossbeam connecting gasket 26 is smaller than the outer diameter of the crossbeam connecting pin 23. The second end of the crossbeam connecting pin 23 is provided with an internally threaded hole. After passing through the crossbeam connecting gasket 26 from the right side, the crossbeam connecting bolt 28 is screwed into and fixed to the internally threaded hole of the crossbeam connecting pin 23, thereby achieving a fixed connection between the crossbeam connecting pin 23 and the crossbeam connecting joint 25.

The crossbeam connecting flange 24 has a mounting outer ring and an inner ring, the inner ring is inserted into the first pin hole 210 and abuts against the axial second end of the crossbeam connecting joint 25, and the outer ring of the crossbeam connecting flange 24 is connected to the crossbeam main body 21 by bolts, thereby achieving a fixed connection between the crossbeam connecting joint 25 and the crossbeam main body 21.

Further, the crossbeam connecting device further includes at least one beam mounting ring 27 disposed in the first pin hole 210 and between the left end of the crossbeam connecting joint 25 and the crossbeam main body 21. In the assembly process, the crossbeam connecting pin 23 sequentially passes through at least one beam mounting ring 24, the crossbeam connecting joint 25 and the crossbeam connecting gasket 26 from the left side and is fixed to the crossbeam connecting bolt 28. The crossbeam mounting ring 27 adjusts the dimensional deviation between the crossbeam connecting joint 25 and the crossbeam main body 21. The number and thickness of the crossbeam mounting ring 27 can be designed according to the specific dimensional deviation, so that the crossbeam connecting joint 25 can be fixed in the crossbeam main body 21 to avoid relative movement and vibration of the crossbeam main body 21 during the operation of the vehicle.

The first end of the crossbeam connecting pin 23 is inserted in the second pin hole provided on the end surface of the crossbeam connecting arm 22, and the outer circumferential surface of the crossbeam connecting pin 23 is extended outward in the radial direction to form a mounting flange which is connected to the flange provided at the end of the crossbeam connecting arm 22 by bolts. The radial force between the crossbeam connecting pin 23 and the crossbeam connecting arm 22 is received by the end of the crossbeam connecting arm 22 inserted into the second pin hole, so that the bolt connected to the crossbeam connecting arm 22 is prevented from receiving shear force.

The assembly process of the crossbeam connecting device for connecting the crossbeam single-structure includes the following steps: firstly, the first end of the crossbeam connecting pin 23 is bolted to the crossbeam connecting arm 22, and then the crossbeam connecting pin 23 is connected to the crossbeam main body 21. The process of connecting the crossbeam connecting pin 23 to the crossbeam main body 21 is to insert the crossbeam mounting ring 27 into the first pin hole 210 of the crossbeam main body 21 according to the measured dimensional deviation, press-fit the crossbeam connecting joint 25, press-fit the crossbeam connecting pin 23 into the crossbeam connecting joint 25, place the crossbeam connecting gasket 26, place the crossbeam connecting bolt 28 through the crossbeam connecting gasket 26 and screw the crossbeam connecting pin 23 to fix, and finally, abut the crossbeam connecting flange 24 at the right end of the crossbeam connecting joint 25 and fix the crossbeam main body 21 by bolts. The axial force, radial force, torsional force, and deflection deformation between the two crossbeam single-structures are all borne by the crossbeam connecting joints.

Further, the crossbeam connecting joint 25 includes a metal shell, a metal inner ring, and a rubber block arranged therebetween. The rubber block is vulcanized with the metal shell and the metal inner ring to form an integrated structure, so that the crossbeam connecting joint 25 has a certain deformation ability. With the crossbeam connecting joint 25 provided in the present embodiment, deflection of a certain angle can be generated between two crossbeam single-structures. For example, in a case where there is a pit under one side of the track and the bogie frame passes through this position, the wheels on two sides are restrained greatly by the conventional rigid crossbeam, which leads to the suspension of the wheels above the pit and easy derailment under the condition of lateral force. However, the flexible deflection is generated between the two crossbeam single-structures through the crossbeam connecting joint 25, so that the wheels above the pit are still attached to the track, and the driving safety is improved. Compared with the conventional rigid crossbeam, the crossbeam provided by the embodiment is applied to the bogie frame, and has better adaptability to complex and harsh lines, higher riding comfort, and higher safety.

The crossbeam of a conventional bogie frame is welded. There are many factors influencing the welding quality, such as ambient temperature, welding flux composition, welding temperature, etc. Poor welding quality will reduce the reliability of the bogie frame. In the embodiment, the bolt connection mode is adopted between the two crossbeam single-structures, so that the reliability is higher.

On the basis of the above technical proposal, the crossbeam single-structure further provides a connecting interface of a plurality of components, thus improving the integration. For example, the middle top surface of the crossbeam main body 21 is provided with an interface for assembling with the sidebeam, and the sidebeam is provided above the crossbeam main body 21. Specifically, a sidebeam positioning pin hole 211 is provided on the middle top surface of the crossbeam main body 21 for passing through the positioning pin provided at the bottom of the sidebeam to restrict the horizontal movement of the sidebeam.

Further, the number of sidebeam positioning pin holes 211 is two disposed sequentially in the longitudinal direction. One of the sidebeam positioning pin holes 211 is a circular hole and the other is an oblong circular hole extended longitudinally in the longitudinal direction. Correspondingly, two positioning pins are disposed at the bottom of the sidebeam, which are inserted into the circular hole and the oblong hole respectively. In the production process, due to the existence of measuring tools, measuring methods, production equipment, and other factors, the distance between the two positioning pins at the bottom of the sidebeam will have an actual deviation within the allowable range. If it cannot be assembled with the crossbeam due to actual deviation, the production takt time will be affected, and then the production progress will be delayed. However, the matching mode of the circular hole and the oblong hole can adapt to the actual deviation between the two positioning pins, complete the assembly of the sidebeam and the crossbeam normally, and improve production efficiency.

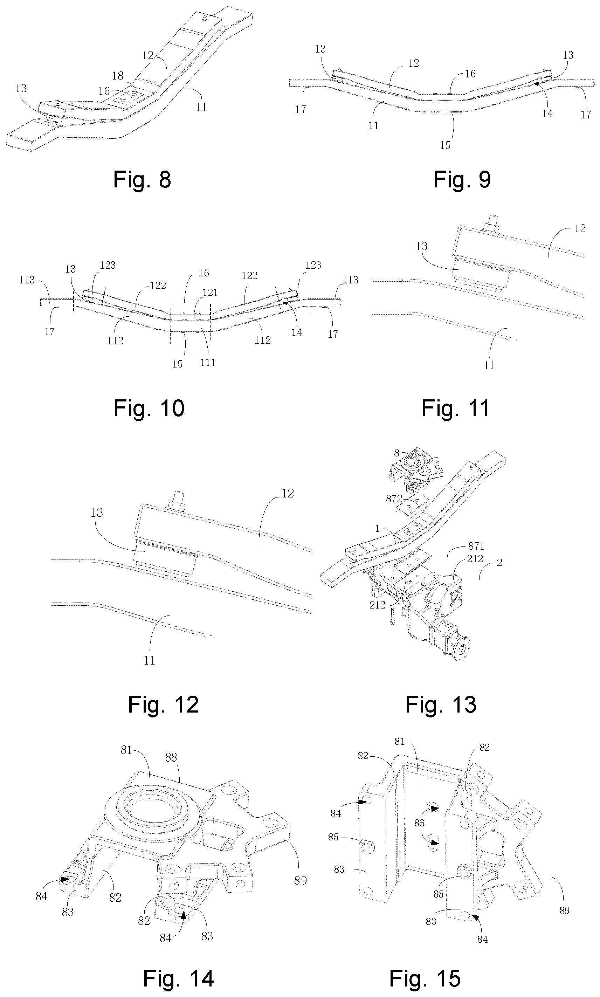

Fig. 8 is a perspective view of the sidebeam provided by the embodiment of the present disclosure, Fig. 9 is a front view of the sidebeam provided by the embodiment of the present disclosure, Fig. 10 is another front view of the sidebeam provided by the embodiment of the present disclosure, Fig. 11 is a schematic view of the sidebeam provided by the present embodiment bearing a first vertical load, and Fig. 12 is a schematic view of the sidebeam provided by the present embodiment bearing a second vertical load. As shown in Figs. 8 to 12, the sidebeam 1 of the bogie frame provided by the embodiment is a double-layer sidebeam, including a main sidebeam plate 11, an auxiliary sidebeam plate 12, and an elastic stopper 13. The main sidebeam plate 11 and the auxiliary sidebeam plate 12 are made of elastic composite fiber material, which has the advantages of light weight, elastic deformation, and the like.

The main sidebeam plate 11 and the auxiliary sidebeam plate 12 are stacked, and are symmetrical laterally as shown in Fig. 9. The auxiliary sidebeam plate 12 is stacked above the main sidebeam plate 11. The middle bottom surface of the auxiliary sidebeam plate 12 is in contact with the top surface of the main sidebeam plate 11. Two ends of the auxiliary sidebeam plate 12 are suspended, i.e. there is a buffer gap 14 between the bottom surfaces of two ends of the auxiliary sidebeam plate 12 and the top surface of the main sidebeam plate 11.

An elastic stopper 13 is provided at the end of the auxiliary sidebeam plate 12 and is located in the buffer gap 14. In a case where the sidebeam 1 is not subjected to a vertical load, there is a certain gap between the elastic stopper 13 and the upper surface of the main sidebeam plate 11. In a case where the middle portion of the sidebeam is subjected to the first vertical load, the main sidebeam plate 11 is slightly elastically deformed, and there is a gap between the elastic stopper 13 and the top surface of the main sidebeam plate 11, as shown in Fig. 11. In a case where the middle portion of the sidebeam is subjected to a greater second vertical load, the main sidebeam plate 11 and the auxiliary sidebeam plate 12 have greater elastic deformation, and the middle portions of the main sidebeam plate 11 and the auxiliary sidebeam plate 12 are pressed and moved downward, and two ends move upward and inward until the elastic stopper 13 is in contact with the top surface of the main sidebeam plate 11, as shown in Fig. 12.

In a case where the vehicle is empty or full, the vehicle load is small, and the elastic stopper 13 is not in contact with the main sidebeam plate 11, as shown in Fig. 11. Only the main sidebeam plate 11 is bearing with the vertical force and transmits to the primary suspension device 4, only the main sidebeam plate 11 has elastic deformation, and the auxiliary sidebeam plate 12 does not bear the force and does not provide support stiffness.

In a case where the vehicle is overloaded and the vehicle load is large, the auxiliary sidebeam plate 12 moves down, and the elastic stopper 13 is in contact with the main sidebeam plate 11, as shown in Fig. 12. At this time, the load of the vehicle is borne by the main sidebeam plate 11 and the auxiliary sidebeam plate 12 at the same time and provides vertical stiffness, which ensures that the support stiffness provided by the bogie frame increases with the increase of the load of the vehicle, so that the vibration amplitude of the carriage is in a small range under different load conditions, and the riding comfort is improved.

On the basis of the above technical solution, the embodiment provides an embodiment of the sidebeam: As shown in Fig. 10, the main sidebeam plate 11 includes a main plate middle section 111, a main plate transition section 112, and a main plate connection section 113. The main plate transition section 112 and the main plate connection section 113 are extended from two ends of the main plate middle section 111 respectively. The main plate connection section 113 is located at the end of the main sidebeam plate 11.

The height of the main plate middle section 111 is lower than the height of the main plate connection section 113, and the main plate transition section 112 is connected between the main plate middle section 111 and the main plate connection section 113. The main plate transition section 112 has an oblique upward shape from the middle to the end of the main sidebeam plate 111. The main plate connection section 113 is adapted to connect to the primary suspension device. The thickness of the main plate middle section 111 is larger than the thickness of the main plate connection section 113, thereby increasing the support strength of the main plate middle section 111. The thickness of the main plate transition section 112 gradually decreases in the direction from the main plate middle section 111 to the main plate connection section 113.

In a specific mode, the thickness of the main plate middle section 111 is uniform and is extended in the horizontal direction. The thickness of the main plate connection section 113 is uniform and is extended in the horizontal direction. The main plate transition section 112 is extended obliquely upward and has thickness gradually decreased in the direction from the main plate middle section 111 to the main plate connection section 113.

As shown in Fig. 10, the auxiliary sidebeam plate 12 includes an auxiliary plate middle section 121 an auxiliary plate transition section 122, and an auxiliary plate connection section 123. The auxiliary plate transition section 122 and the auxiliary plate connection section 123 respectively are extended from two ends of the auxiliary plate middle section 121. The height of the auxiliary plate middle section 121 is lower than the height of the auxiliary plate connection section 123, and the auxiliary plate transition section 122 is connected between the auxiliary plate middle section 121 and the auxiliary plate connection section 123. In a specific mode, the thickness of the auxiliary plate middle section 121 is uniform and is extended in the horizontal direction. The thickness of the auxiliary plate transition section 122 can be uniformly provided or not uniformly provided and can be extended obliquely upward.

The auxiliary plate connection section 123 is located at the end of the auxiliary plate transition section 122 and is extended in the same direction as the auxiliary plate transition section 122. The vertical projection of the auxiliary board connection section 123 is on the main plate transition section 122, and the buffer gap 14 is formed between the auxiliary board connection section 123, the auxiliary board transition section 122, and the main plate transition section 112. The elastic stopper 13 is provided at the auxiliary plate connection section 123, and in a case where the load on the sidebeam 1 is large, the elastic stopper 13 is in contact with the main plate transition section 112.

The elastic stopper 13 is a structure with a certain stiffness and a certain elastic buffer capacity. Specifically, the embodiment provides an elastic stopper 13 including a stopper block and a stopper connector. The stopper block includes a metal shell and a rubber block disposed inside the metal shell, and the rubber block and the metal shell form an integrated structure through the vulcanization process. One end of the stopper connector is connected to the metal shell, and the other end is connected to the auxiliary sidebeam plate 12.

In the bogie frame provided by the embodiment, the sidebeam 1 is disposed above the crossbeam 2. The bottom surface of the main plate middle section 111 is provided with a first sidebeam positioning pin 15 for positioning with the crossbeam 2, and the first sidebeam positioning pin 15 is extended in a direction perpendicular to the main plate middle section 111. In the assembly process, the positioning between the crossbeam 2 and the sidebeam 1 is realized by inserting the first sidebeam positioning pin 15 into the sidebeam positioning pin hole 211, so that there is no relative movement between the crossbeam and the sidebeam in the horizontal direction.

Both the main sidebeam plate 11 and the auxiliary sidebeam plate 12 are made of an elastic composite fiber material, which can be, for example, a carbon fiber composite material, a glass fiber composite material, or a carbon fiber and a glass fiber composite material. On the basis of the above materials, other composite materials can also be added.

In a specific mode, the number of the first side member positioning pins 15 is two, and the first sidebeam positioning pins 15 are disposed on intervals along the longitudinal direction of the main sidebeam plate 11. The first sidebeam positioning pin 15 can be made of metal or a material having higher hardness. In a case where the first sidebeam positioning pin 15 is made of metal and the main sidebeam plate 11 is made of carbon fiber composite material, a metal member is pre-embedded in the bottom of the main sidebeam plate 11, the outer end of the metal member exposes the main sidebeam plate 11 and forms a flat plate structure, and the first sidebeam positioning pin 15 is fixed to the flat plate structure.

In addition, a second sidebeam positioning pin 16 is provided on the middle top surface of the auxiliary sidebeam plate 12 for positioning with the secondary suspension device of the bogie frame. The second sidebeam positioning pin 16 is extended in a direction perpendicular to the middle top surface of the auxiliary sidebeam plate 12. The number of the second sidebeam positioning pins 16 is two, and the second sidebeam positioning pins 16 are disposed on intervals along the longitudinal direction of the auxiliary sidebeam plate 12. The second sidebeam positioning pin 16 can be made of metal or a material having higher hardness. In a case where the second sidebeam positioning pin 16 is made of metal and the auxiliary sidebeam plate 12 is made of carbon fiber composite material, a positioning metal member 18 is pre-embedded in the bottom of the auxiliary sidebeam plate 12, the outer end of the positioning metal member 18 exposes the upper surface of the auxiliary sidebeam plate 12 and forms a flat plate structure, and the second sidebeam positioning pin 16 is fixed to the flat plate structure.

Further, the bottom surfaces of two ends of the main sidebeam plate 11 are provided with third sidebeam positioning pins 17 for positioning with the primary suspension device of the bogie frame. The third sidebeam positioning pins 17 are extended in a direction perpendicular to the bottom surface of the end of the main sidebeam plate 11. One of the third sidebeam positioning pins 17 is provided at each end of the main sidebeam plate 11. The third sidebeam positioning pin 17 can be made of metal or a material with higher hardness. In a case where the third sidebeam positioning pin 17 is made of metal and the main sidebeam plate 11 is made of carbon fiber composite material, a metal member can also be pre-embedded in the main sidebeam plate 11 with reference to the above method, and the portion of the metal member exposed from the bottom surface of the main sidebeam plate 11 is connected to the third sidebeam positioning pin 17.

Further, two secondary mounting platforms 212 protruded from the top surface of the crossbeam main body 21 are provided on the top surface of the crossbeam main body 21. A recessed area formed between the two secondary mounting platforms 212 can receive the sidebeam 1, and a sidebeam positioning pin hole 211 is provided in the recessed area. Two secondary suspension mounting seats 8 are provided, which are respectively covered over the sidebeam 1 and connected to the crossbeam 2. A mounting channel penetrating in the longitudinal direction is formed between the secondary suspension mounting seat 8 and the crossbeam 2, the sidebeam 1 is penetrated in the mounting channel, and the middle portion of the sidebeam 1 is located in the mounting channel. The sidebeam 1 and the crossbeam 2 are two independent structures. In the assembly process, the sidebeam is first placed at the installation position of the crossbeam 2, and then the secondary suspension mounting seat 8 is covered on the sidebeam 1 and assembled with the crossbeam 2.

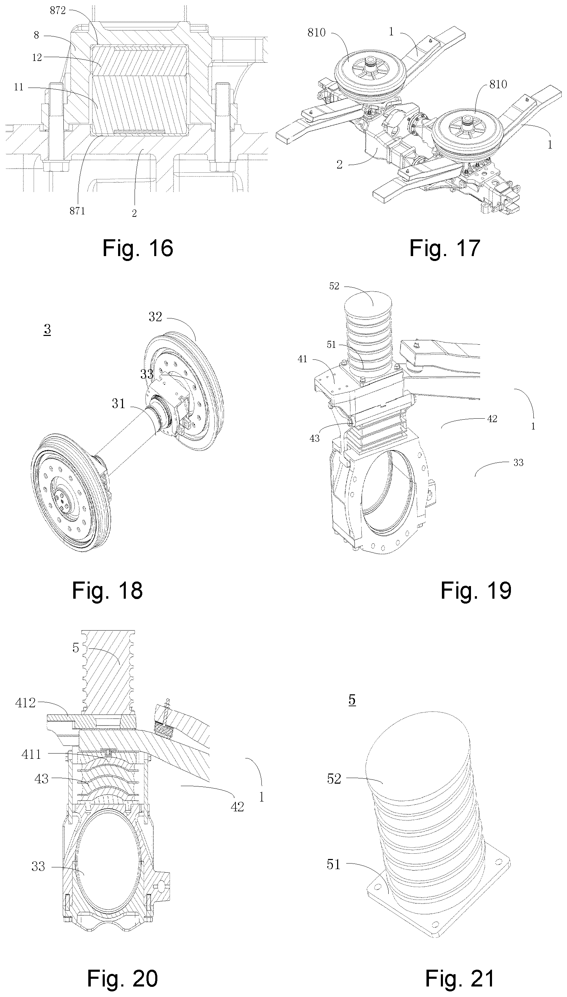

Fig. 13 is an exploded view of the crossbeam, the sidebeam, and the secondary suspension mounting seat of the bogie frame provided by the embodiment of the present disclosure. Fig. 14 is a top perspective view of the secondary suspension mounting seat provided by the embodiment of the present disclosure. Fig. 15 is a bottom perspective view of the secondary suspension mounting seat provided by the embodiment of the present disclosure. Fig. 16 is a partially sectional view of the assembly of the secondary suspension mounting seat, the sidebeam, and the crossbeam provided by the embodiment of the present disclosure.

As shown in Figs. 13 to 16, the secondary suspension mounting seat 8 includes a mounting seat top plate 81 and a mounting seat side plate 82. The mounting seat top plate 81 is extended in the transverse direction and the top surface thereof to mount the secondary suspension device. The mounting seat side plate 82 is provided vertically and parallel to the longitudinal direction, and the number of the mounting seat side plates 82 is two. The top ends of the two mounting seat side plates 82 are respectively connected to two opposite edges of the mounting seat top plate 81. The bottom end of the mounting seat side plate 82 is bent outward to form a mounting seat connecting portion 83 which is fixedly connected to the secondary mounting platform 212.

Specifically, seat bolt holes 84 are provided at two ends of each mounting seat connecting portion 83, and secondary bolt holes 2121 are provided in the secondary mounting platform 212. The mounting seat connecting portion 83 is fixed to the secondary mounting platform 212 by connecting the mounting seat bolt holes 84 with bolts.

Further, a mounting seat positioning projection 85 is provided on the bottom surface of each mounting seat connecting portion 83, and the mounting seat positioning projection 85 on two of the mounting seat connecting portions 83 can be cylindrical. The secondary mounting platform 212 is correspondingly provided with secondary positioning holes 2122, one of which is a circular positioning hole and the other is an oblong positioning hole. One mounting seat positioning protrusion 85 is inserted into the circular positioning hole for accurate positioning, and the other mounting seat positioning protrusion 85 is inserted into the oblong positioning hole, which can adapt to the production deviation of the mounting seat positioning protrusion 85 and avoid the problem that the production takt time cannot be affected due to the production deviation.

Alternatively, the mounting seat positioning protrusion 85 on one of the mounting seat connecting portions 83 has a cylindrical shape, and the mounting seat positioning protrusion 85 on the other mounting seat connecting portion 83 has a long cylindrical shape. The secondary mounting platform 212 is provided with a circular positioning hole and an oblong positioning hole correspondingly, and a cylindrical mounting seat positioning protrusion 85 and a long cylindrical mounting seat positioning protrusion 85 are respectively inserted.

The lower surface of the mounting seat top plate 81 of the secondary suspension mounting seat 8 is provided with sidebeam positioning counterbore 86, the number and position of which correspond to the second sidebeam positioning pins 16. During assembly, the sidebeam 1 and the secondary suspension mounting seat 8 are positioned by inserting the second sidebeam positioning pin 16 into the sidebeam positioning counterbore 86.

On the basis of the above technical solution, the bogie frame can also be improved as follows. a lower transition plate 871 is disposed between the sidebeam 1 and the crossbeam 2 to cushion the force between the sidebeam 1 and the crossbeam 2. Particularly in a case where the sidebeam 1 is made of an elastic fiber composite material the lower transition plate 871 can reduce the wear of the sidebeam 1 and ensure the strength of the sidebeam 1.

Specifically, the lower transition plate 871 can be a plate-like structure parallel to the horizontal plane. Further, two sides of the lower transition plate 871 are extended upward to two sides of the sidebeam 1 and wrap the sidebeam 1. The lower transition plate 871 is provided with a through hole through which the first sidebeam positioning pin 15 passes.

Further, an upper transition plate 872 is provided between the sidebeam 1 and the secondary suspension mounting seat 8. The force between the sidebeam 1 and the secondary suspension mounting seat 8 is cushioned. Particularly in a case where the sidebeam 1 is made of an elastic fiber composite material the upper transition plate 872 can reduce the wear of the sidebeam 1 and ensure the strength of the sidebeam 1. Specifically, the upper transition plate 872 can be a plate-like structure parallel to the horizontal plane. Further, two sides of the upper transition plate 872 are extended downward to two sides of the sidebeam 1 and wrap the sidebeam 1. The upper transition plate 872 is correspondingly provided with a through hole through which the second sidebeam positioning pin 16 passes.

Fig. 17 is a structural schematic view of the bogie frame with the secondary suspension mounting seat disposed thereon provided by the embodiment of the present disclosure. Further, the upper surface of the mounting seat top plate 81 is connected to the secondary suspension device. The secondary suspension device can be a rubber stack, steel spring, or air spring. In the embodiment, an air spring 810 is employed as a secondary suspension device. As shown in Fig. 17, a secondary mounting portion 88 is provided on the upper surface of the mounting seat top plate 81, which is an annular structure protruded from the mounting seat top plate 81, and the center line of the secondary mounting portion 88 is extended in the vertical direction. The bottom of the air spring 810 is inserted in the secondary mounting portion 88 to limit the horizontal direction.

Fig. 18 is a structural schematic view of wheelset of the bogie frame provided by the embodiment of the present disclosure. Fig. 19 is a partial schematic view of the bogie frame disposed with the safety stopper device provided by the embodiment of the present disclosure. As shown in Figs. 1, 18, and 19, the number of wheelsets 3 is two, which are arranged on two sides of the crossbeam 2 and located below the end of the sidebeam 1. The wheelset 3 includes a shaft 31, wheels 32, and a shaft box 33. The number of wheels 32 is two, which are symmetrically disposed on the shaft 31. The number of shaft boxes 33 is two, which are symmetrically disposed on the shaft 31. The shaft box 33 can be located inside or outside the wheel 32. In the embodiment, the shaft box 33 is located inside the wheel 32 as an example.

The primary suspension device 4 is provided between the sidebeam 1 and the shaft box 33 for transmitting a vertical force between the sidebeam 1 and the shaft box 33, and also for buffering vibration between the shaft box 33 and the sidebeam 1. The first suspension device has certain stiffness and elastic deformation ability, and the elastic deformation direction is extended vertically.

In addition, the bogie frame provided in the embodiment further includes a safety stopper device 5, which is disposed on the top of the primary suspension device 4, and there is a gap between the safety stopper device 5 and the car body during normal operation of the vehicle. In a case where the sidebeam 1 fails, the car body falls on the safety stopper device 5, and the safety stopper device 5 is bearing the car body load, thus protecting the normal operation of the shaft and improving the operation safety.

The safety stopper device 5 has certain rigidity and can bear the weight load of the car body. For example, the safety stopper device 5 is made of a rigid material. Alternatively, the safety stopper device 5 may have a certain elastic cushioning capacity while having a certain stiffness and can buffer vibration between the car body and the shaft box.

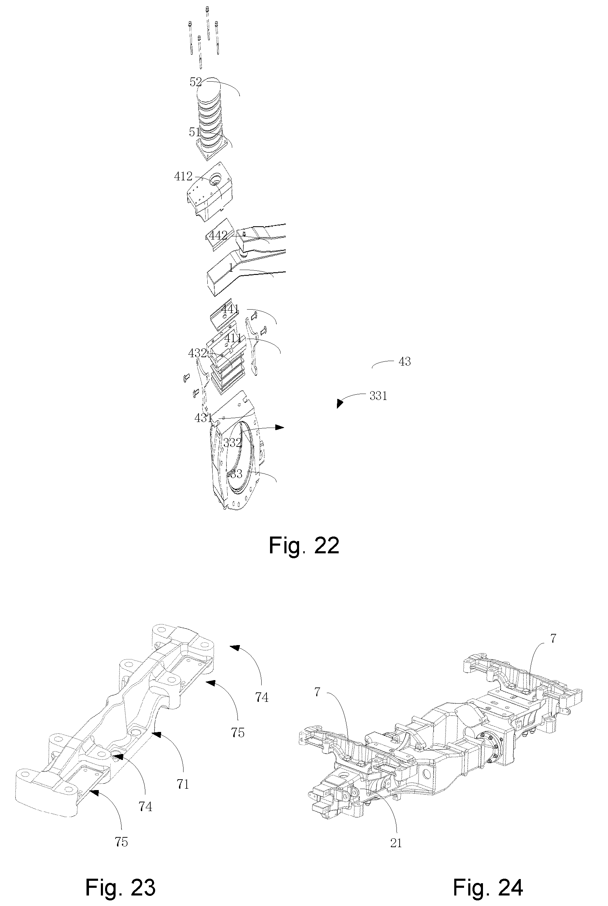

Fig. 20 is a sectional view of the bogie frame disposed with the safety stopper device provided by the embodiment of the present disclosure. Fig. 21 is a structural schematic view of the safety stopper device provided by the embodiment of the present disclosure. Fig. 22 is an exploded view of the assembly of the safety stopper device, the primary suspension, and the shaft box provided by the embodiment of the present disclosure. As shown in Figs. 20 to 22, in the present embodiment, the safety stopper device 5 includes a safety stopper seat 51 and a safety stopper 52. The safety stopper 52 is fixed to the safety stopper seat 51 mounted to the top of the primary suspension device 4. The safety stopper 52 has a certain elastic deformation capability, and the elastic deformation direction of the safety stopper 52 is extended in the vertical direction, i.e. has the same elastic deformation direction as the primary suspension device 4.

In another specific implementation, the safety stopper 52 includes a plurality of metal layers and a plurality of rubber layers disposed in a stack, and the rubber layer is disposed between two adjacent metal layers. The metal layer and the rubber layer form an integrated structure through the vulcanization process. The metal layer at the bottom is in contact with the safety stopper seat 51. The rubber layer has a certain elastic buffer capacity, and the metal layer has a certain stiffness to bear the weight load of the car body.

The embodiment provides a concrete implementation mode of a primary suspension device 4. The primary suspension device 4 includes a primary suspension mounting seat 41 and a primary suspension 42. The primary suspension 42 is disposed on the top of the shaft box 33, and a primary positioning post is disposed on the bottom of the primary suspension 42, which is correspondingly inserted into the primary positioning hole 331 disposed on the top of the shaft box 33 for restricting the horizontal movement of the primary suspension 42. The primary suspension mounting seat 41 is provided at the top of the primary suspension 42, and a safety stopper seat 51 in the safety stopper device 5 is mounted on the primary suspension mounting seat 42. A receiving space for receiving the end of the sidebeam 1 is provided in the primary suspension mounting seat 41, and the end of the sidebeam 1 penetrates into the receiving space.

In a specific implementation mode, the primary mounting seat 41 is formed by covering and connecting a lower mounting seat 411 with an upper mounting seat 412, and the receiving space is formed between the lower mounting seat 411 and the upper mounting seat 412. Specifically, the lower mounting seat 411 is made of a metal material and is vulcanized with rubber on the top of the primary suspension 42 to form an integral structure. The upper mounting seat 411 is fixedly connected to the upper mounting seat 412 by bolts.

In a specific implementation mode, bolt holes are provided corresponding to the safety stopper seat 51, the upper mounting seat 412 and the lower mounting seat 411, and bolts are passed through the safety stopper seat 51, the upper mounting seat 412, and the lower mounting seat 411 sequentially from top to fix the three seats.

The upper mounting seat 412 is provided with a weight reduction hole, which can reduce the weight of the primary suspension device 4, thereby reducing the dead weight of the bogie frame and improving the traction efficiency of the railway vehicle. The weight reduction hole is circular and provided on the upper mounting seat 412, and the center line is extended vertically.

Further, a wheelset lift 43 is provided, the top end of which is connected to the primary suspension mounting seat 41 and the bottom end of which is connected to the shaft box 33, so as to restrict the vertical movement of the primary suspension 42 and prevent the primary suspension 42 from being separated from the shaft box 33 due to vertical movement.

In a specific implementation mode, the top of the shaft box 33 is planar, and two primary positioning holes 331 are disposed on the middle of the top of the shaft box 33 and disposed on intervals in the longitudinal direction. A limiting edge is extended in a direction perpendicular to the center line of the shaft box (i.e., the longitudinal direction), and a limiting recess 332 is formed on the limiting edge. The bottom end of the wheelset lift 43 is extended to two sides to form a limiting stopper protrusion 431. The wheelset lift 43 can be fitted in the limiting recess 332, and the limiting stopper protrusion 431 is restricted below the limiting edge. The limiting edge prevents the wheelset lift 43 from moving upward.

Further, two connecting arms 432 are diverged upward from the middle portion of the wheelset lift 43 and are respectively connected to the end surfaces of the lower mounting seat 411. The embodiment provides a specific implementation mode: the wheelset lift 43 has a "Y" shaped structure. In the assembly process, the middle portion of the wheelset lift 43 is inserted into the limiting recess 332, the two connecting arms 432 at the top of the wheelset lift 43 are respectively connected to the longitudinal end surface of the lower mounting seat 411 through bolts, and the limiting stopper protrusion 431 at the bottom is located below the limiting edge.

Each of the longitudinal ends of the lower mounting seat 411 is provided with a wheelset lift 43, and the longitudinal movement of the wheelset lift 43 is restricted by bolting to the wheelset lift 43, and the shaft box 33 restricts the vertical movement of the wheelset lift 43. With the above-mentioned embodiments, the vertical movement of the primary suspension 42 is restricted so as to avoid being separated from the shaft box 33 due to excessive movement.

The wheelset lift 43 can also play an auxiliary lifting role during lifting the bogie frame. Specifically, during the hoisting process, the sidebeam moves upward, and the wheelset is driven to move upward by the primary suspension mounting seat and the wheelset lift 43.

The sidebeam 1 provided in the embodiment can be made of a composite material, such as a carbon fiber composite material, so that the sidebeam 1 has a certain flexibility and improves the adaptability to the car body load. On this basis, a lower pad plate 441 can be provided between the sidebeam 1 and the lower mounting seat 411, and two sides of the lower pad plate 441 are extended upwardly to the bottom surface higher than the end of the sidebeam 1 to cover the side surface of the sidebeam 1. The lower pad plate 441 can reduce the wear of the sidebeam 1.

An upper pad plate 442 is provided between the sidebeam 1 and the upper mounting seat 412, and two sides of the upper pad plate 442 are extended downward to the top surface lower than the end of the sidebeam 1 and cover the side surface of the sidebeam 1. The upper pad plate 442 can reduce the wear of the sidebeam 1.

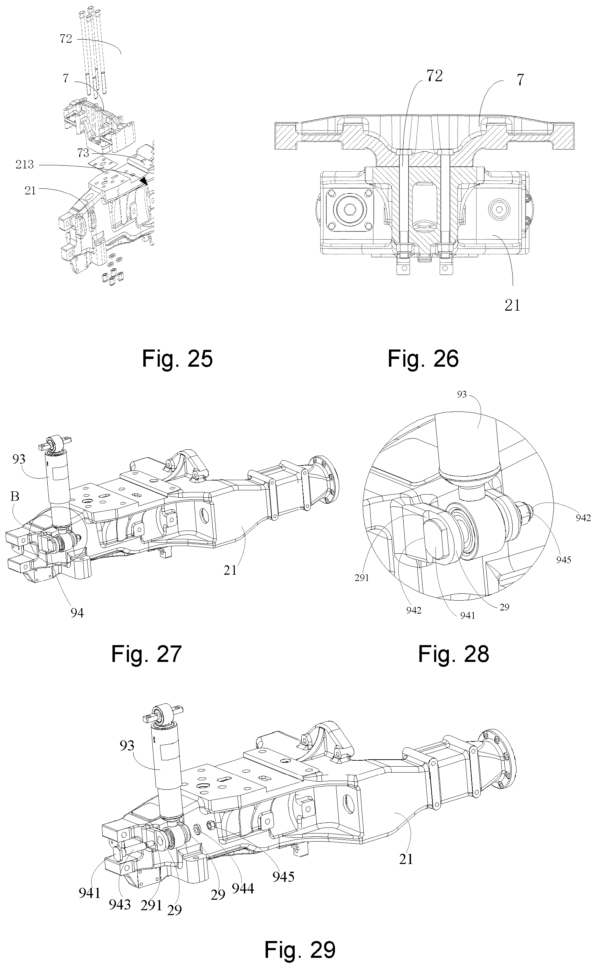

Fig. 23 is a perspective view of the brake hanging bracket of the bogie frame provided by the embodiment of the present disclosure. Fig. 24 is a schematic view of the connection between the brake hanging bracket and the crossbeam provided by the embodiment of the present disclosure. Fig. 25 is an exploded view of the connection between the brake hanging bracket and the crossbeam provided by the embodiment of the present disclosure. Fig. 26 is a sectional view of the connection between the brake hanging bracket and the crossbeam provided by the embodiment of the present disclosure. As shown in Figs. 4, 23 to 26, the crossbeam main body 21 is provided with a brake hanging bracket connecting interface for connecting with the brake hanging bracket 7.

One implementation mold is that the brake hanging bracket connecting interface is a brake bolt hole 213 provided in the crossbeam main body 21, and is connected to the brake hanging bracket 7 through a brake crossbeam connecting bolt 72. Specifically, the top surface of the crossbeam main body 21 is provided with a brake mounting platform protruded from the top surface of the crossbeam main body 21, and the brake mounting platform is provided with a bolt hole for connecting with the brake device as a brake device interface. In a specific implementation mode, the brake mounting platform and the secondary mounting platform 212 are integrated, and a brake bolt hole 213 is disposed on the brake mounting platform, for connecting with the brake hanging bracket in the brake device.

The brake hanging bracket 7 includes a hanging bracket main body which is extended in the longitudinal direction and is located above the crossbeam. The brake crossbeam connecting holes 71 are provided in the middle portion of the hanging bracket main body. The number of brake crossbeam connecting holes 71 is four, which are symmetrically arranged on two sides of the hanging bracket main body and are respectively connected to brake bolt holes 213 on the crossbeam main body 21 through brake crossbeam connecting bolts 72.

The brake hanging bracket 7 can be made of a rigid material or made of composite fiber material. In the embodiment, the brake hanging bracket 7 is made of carbon fiber material. A brake hanging bracket liner 73 is further provided between the brake hanging bracket 7 and the crossbeam main body 21, and a through hole through the brake hanging bracket liner 73 is correspondingly provided for passing the brake crossbeam connecting bolt 72. The brake hanging bracket liner 73 is employed to protect the brake hanging bracket 7 and reduce the wear thereof. Two ends of the brake hanging bracket 7 are provided with interfaces for connecting the brake device. Specifically, four brake device mounting holes 74 are provided at two ends of the brake hanging bracket 7, which are symmetrically arranged on two sides of the hanging bracket main body and connected to the brake device by bolts.

As shown in Fig. 4, the crossbeam main body 21 is further provided with a connecting interface for the vertical vibration damper, for example. vertical vibration damper mounting lugs 214 are provided on the side of the crossbeam main body 21. The number of vertical vibration damper mounting lugs 214 is two parallel to each other and provided on the side surface of the crossbeam main body 21. A bolt hole is provided in the vertical vibration damper mounting lug 214.

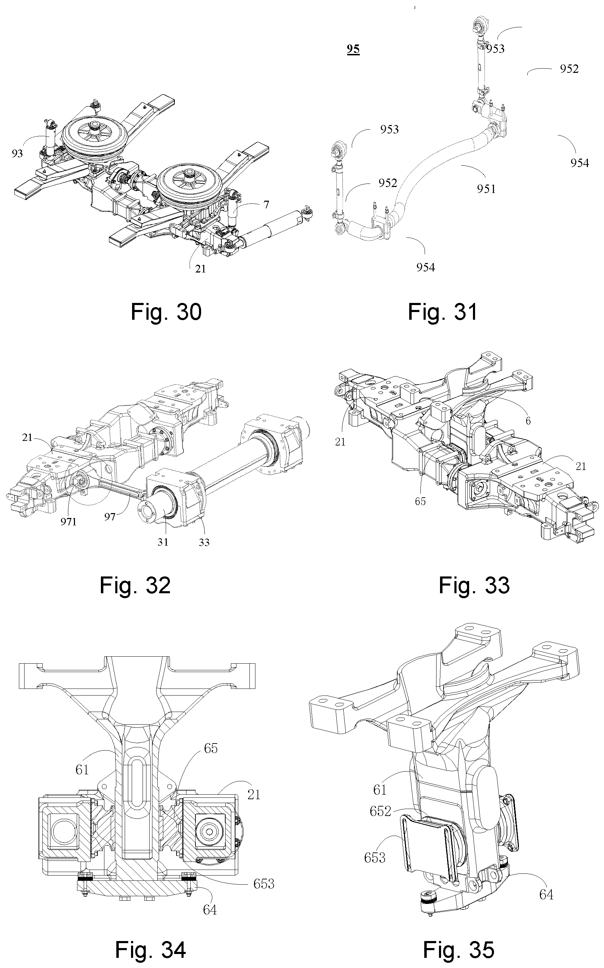

Fig. 27 is a perspective schematic view of the connection between the crossbeam and the vertical vibration damper provided by the embodiment of the present disclosure. Fig. 28 is an enlarged schematic view of area B in Fig. 27. Fig. 29 is an exploded schematic view of the connection between the crossbeam and the vertical vibration damper provided by the embodiment of the present disclosure. Fig. 30 is a schematic view of the arranged position of the vertical vibration damper on the bogie frame provided by the embodiment of the present disclosure. As shown in Figs. 27 to 30, the end of the vertical vibration damper 93 is provided with bolt holes. The crossbeam 2 has mounting lugs 29 provided with mounting holes, and the mounting lugs 29 further provided with a limiting surface 291 having at least a portion of a plane for abutting a first side plane 942 of a first bolt head 941.

The first fixing bolt 94 has the first screw 943 and the first bolt head 941 disposed at one end of the first screw 943. The first screw 943 is matched with the mounting hole and the bolt hole, and the first side plane 942 of the first bolt head 941 is abutted against the limiting surface 291.

The upper end of the vertical vibration damper 93 is connected to the car body of the railway vehicle. The joint at the lower end of the vertical vibration damper 93 is provided with bolt holes. The bolt holes are provided in a direction perpendicular to the axial direction of the vertical vibration damper 93. There can be two vertical vibration dampers 93, and the two vertical vibration dampers 93 are respectively provided on two sides of the longitudinal center line. Accordingly, the crossbeam 2 is provided with two vertical vibration damper interfaces for mounting two vertical vibration dampers 93 respectively. The crossbeam 2 is provided with two pairs of mounting lugs 29, each pair including two corresponding mounting lugs 29. One end of the vertical vibration damper 93 is disposed between two corresponding mounting lugs 29. The mounting lug 29 is provided on the side surface of the crossbeam main body 21 and is extended along the longitudinal direction of the car body.

The mounting lug 29 includes a head end and a tail end, and the head end of the mounting lug 29 is connected to the crossbeam main body 21 of the crossbeam 2. Of the two corresponding mounting lugs 29, the tail end of one mounting lug 29 is disposed inwardly with respect to the outer surface of the head end of the mounting lug 29 away from the outer surface of the other mounting lug, a connecting surface is connected between the outer surface of the head end and the outer surface of the tail end, and at least part of the connecting surface forms a limiting surface 291. In other words, the mounting lug 29 has a step-like structure. The mounting lug 29 has a first step surface and a second step surface, and a connecting surface connecting the first step surface and the second step surface at least partially forms the limiting surface 291.

The first screw 943 of the first fixing bolt 94 is provided through the bolt hole of the vertical vibration damper 93 and the mounting hole of the mounting lug 29. One end of the first screw 943 is provided with the first bolt head 941, the cross-sectional area of the first bolt head 941 is larger than the cross-sectional area of the first screw 943. The first bolt head 941 has at least one first side plane 942.

The head of the bolt includes four sides. Two facing sides are curved surfaces, and the other two facing sides are planes. At least part of the joint between the first end and the second end of the mounting lug 29 is plane, and the joint forms a limiting surface 291, which can abut against one of the first side planes 942 of the first bolt head 941 to achieve the purpose of limiting and preventing loosening.

It is to be understood that the configuration of the first bolt head 941 is not limited thereto and the present embodiment is only exampled here. For example, the first bolt head 941 may also have a regular hexagonal structure, in which case the first bolt head 941 has six side planes. The limiting surface 291 of the crossbeam can abut one of the six side planes of the first bolt head 941.

In this example, the limiting surface 291 of the mounting lug 29 can come into face-to-face contact with the first side plane 942 of the first bolt head 941 of the first fixing bolt 94, thereby forming a loosening prevention structure for the first fixing bolt 94. Thus, in a case where the first fixing bolt 94 is impacted and has a tendency to rotate, the limiting surface 291 of the mounting lug 29 can counteract the impact force driving the first fixing bolt 94 to rotate by applying a force on the first side plane 942 of the first bolt head 941, thereby preventing the first fixing bolt 94 from loosening and ensuring the reliability of the connection between the crossbeam and the vertical vibration damper 93.

In one implementation, the first fixing bolt 94 further includes a first nut 945 matched with the first screw 943. The first nut 945 is positioned at one end of the first screw 943 away from the first bolt head 941. The bogie frame further includes a first adjusting gasket 944 positioned between the first nut 945 and the corresponding mounting lug 29. The number of the first adjusting gaskets 944 is adjustable and the number of the first adjusting gaskets 944 can be designed according to actual needs.

In this example, by adjusting the number of the first adjusting gaskets 944, the spacing between the ends of the first nut 945 and the corresponding mounting lugs 29 can be adjusted, further facilitating the improvement of the connection reliability between the vertical vibration damper 93 and the traction center pin.

The crossbeam in the embodiment further provides a connecting interface for other components. As shown in Figs. 1 and 4, the crossbeam main body 21 is further provided with a connecting interface for anti-roll torsion bars. For example, an anti-roll torsion bar mounting portion 215 is provided on the side surface of the crossbeam main body 21. The anti-roll torsion bar mounting portion 215 is provided at the bottom of the crossbeam main body 21, extended in the longitudinal direction, and provided with mounting holes extending in the vertical direction. Fig. 31 is a perspective view of an anti-roll torsion bar provided by the embodiment of the present disclosure. As shown in Fig. 31, the anti-roll torsion bar 101 includes a transverse torsion bar 951 and a vertical torsion bar 952 connected at two ends of the transverse torsion bar 951.

The transverse torsion bar 951 is horizontally arranged and extended in the transverse direction. Two ends of the transverse torsion bar 951 are bent and extended outwardly in the longitudinal direction. The vertical torsion bar 952 is extended in the vertical direction and the bottom end of which is connected to the transverse torsion bar 951 through a torsion bar joint 953. The top end of the vertical torsion bar 952 is connected to the car body through the torsion bar joint 953.

The anti-roll torsion bar 95 is connected to the crossbeam by a torsion bar mounting member 954 and specifically to the anti-roll torsion bar mounting portion 215 by bolts. The torsion bar mounting member 954 includes an upper mounting member body with an upper concave arc groove at the bottom and a lower mounting member body with a lower concave arc groove at the top. The upper mounting member body is coupled with the lower mounting member body, and the upper concave arc groove is coupled with the lower concave arc groove to form a circular hole passed through with the transverse torsion bar 951. The upper mounting member body and the lower mounting member body are connected together by bolts and are connected to the anti-roll torsion bar mounting portion 215.

As shown in Figs. 1 and 4, the crossbeam further provides an interface for connecting the anti-yaw damper 96, specifically an anti-yaw damper mounting plate 216 provided at the outer end of the crossbeam main body 21, specifically including two horizontal mounting plates arranged upper and lower, and the longitudinal end surfaces of the horizontal mounting plate are provided with bolt holes for connecting with the anti-yaw damper 96 by elastic joints.

Fig. 32 is a structural schematic view of the crossbeam connected to the shaft box through a tension-only rod provided by the embodiment of the present disclosure. As shown in Figs. 4 and 32, the crossbeam further provides a connecting interface for a tension-only rod 97 connected between the crossbeam and the shaft box 33 for transmitting a longitudinal force between the crossbeam 2 and the shaft box 33. Specifically, the crossbeam main body 21 is provided with a tension-only rod connecting portion 217, and one end of the tension-only rod 97 is provided with a rod joint 971, which is connected to the tension-only rod connecting portion 217 by bolts. The other end of the tension-only rod 97 is provided with a rod joint 971, which is connected to the shaft box 33 by bolts. The rod joint 971 is an elastic joint, which is vulcanized from metal and rubber, and can cushion the buffer force between the tension-only rod, the crossbeam, and the shaft box, and can better adapt to the longitudinal and transverse pulling forces.

Further, as shown in Fig. 4, a nameplate mounting portion 219 is provided on the crossbeam main body 21 for mounting a bogie frame nameplate. The nameplate mounting portion 219 is an inclined plane, and the four corners of the nameplate mounting portion 219 are provided with screw holes for fixing the bogie frame nameplate to the crossbeam 2 by screws.

On the basis of the above technical proposal, the crossbeam 2 is further provided with a center pin connecting portion 218 for matching with the traction center pin 6. As shown in Fig. 1, the top end of the traction center pin 6 is connected to the car body and the bottom end is connected to the crossbeam 2, and the traction center line 6 is employed to transmit longitudinal traction or braking force between the car body and the bogie frame.

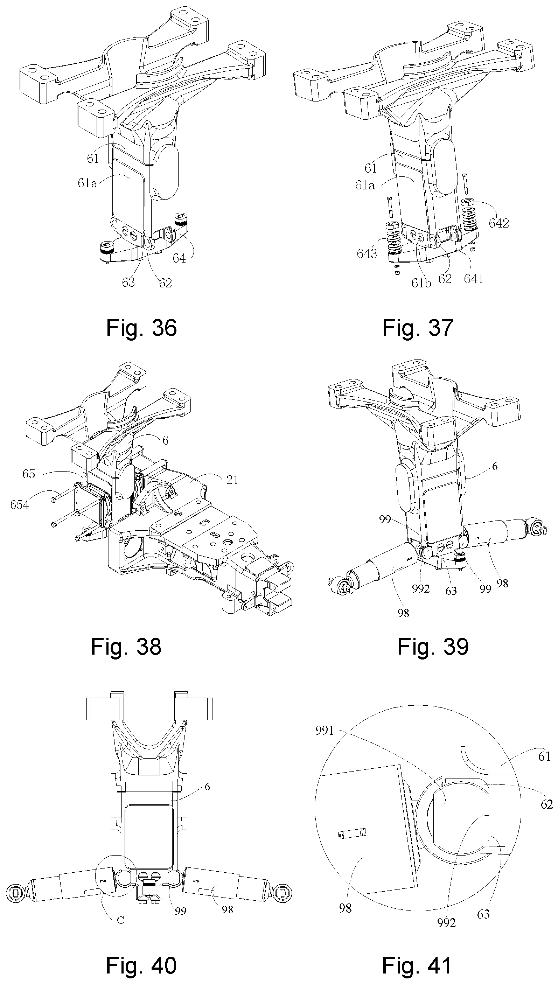

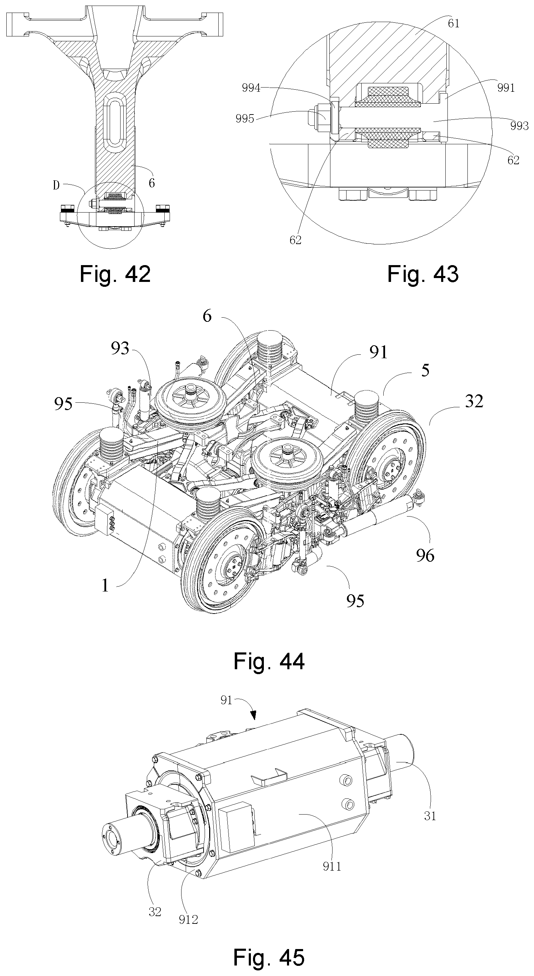

Fig. 33 is a perspective schematic view of the connection of the traction center pin, the longitudinal stopper and the crossbeam provided by the embodiment of the present disclosure. Fig. 34 is a schematic sectional view of the connection of the traction center pin, the longitudinal stopper and the crossbeam provided by the embodiment of the present disclosure. Fig. 35 is a perspective schematic view of the connection between the traction center pin and the longitudinal stopper provided by the embodiment of the present disclosure. Fig. 36 is a structural schematic view of the traction center pin provided by the embodiment of the present disclosure. Fig. 37 is an exploded schematic view of the traction center pin provided by the embodiment of the present disclosure. Fig. 38 is a perspective schematic view of the connection between the traction center pin and the crossbeam provided by the embodiment of the present disclosure. Fig. 39 is a perspective schematic view of the connection between the traction center pin and the transverse vibration damper provided by the embodiment of the present disclosure. Fig. 40 is a front view of the connection between the traction center pin and the transverse vibration damper provided by the embodiment of the present disclosure. Fig. 41 is an enlarged schematic view of area C in Fig. 34. Fig. 42 is a sectional view of the connection between the traction center pin and the transverse vibration damper provided by the embodiment of the present disclosure. Fig. 43 is an enlarged schematic view of area D in Fig. 42.

As shown in Figs. 33 to 43, the traction center pin 6 has a center pin main body 61, the bottom of which is inserted in a gap between the two crossbeam single-structures 2. Two longitudinal stoppers 65 are provided at corresponding sides of the center pin main body 61, and the longitudinal stoppers 65 are provided between the crossbeam single-structure 2 and the center pin main body 61. The side of the center pin main body is provided with a stopper contact area 61a which forms an area on the traction center pin 6 for contact with the longitudinal stopper 65. The stopper contact area 61a can be provided on the front side and the rear side of the center pin main body 61 where the front refers to the front of the traveling direction of the railway vehicle.

Two longitudinal stoppers 65 are respectively provided in the stopper contact area 61a of the traction center pin 6. One side of the longitudinal stopper 65 is in contact with the stopper contact area 61a and the other side is connected to the center pin connecting portion 218 of the crossbeam 2 by a plurality of stopper fixing bolts 654. In the implementation, the center pin connecting portion 218 is disposed on the crossbeam connecting arm 22, the center pin connecting portion 218 is relatively located at the middle of the crossbeam connecting arm 22, one or more first adjusting gaskets 944 are disposed between the longitudinal stopper 65 and the crossbeam 2, and the distance between the longitudinal stopper 65 and the traction center pin 6 is adjusted by increasing or decreasing the first adjusting gaskets 944. The longitudinal stopper 65 is in contact with the traction center pin 6 to transmit longitudinal traction force and longitudinal braking force.

The longitudinal stopper 65 has a stopper main body 652 and a mounting flange 653. The periphery of the mounting flange 653 is protruded from the stopper main body 652. The mounting flange 653 is connected to the crossbeam 2 by the plurality of stopper fixing bolts 654. In this example, the periphery of the mounting flange 653 is protruded from the stopper main body 92, thereby providing a larger operating space for mounting the first fixing bolt 94 and facilitating to reduce assembly difficulty.

The traction center pin 6 further includes a mounting arm 62 provided at the lower portion of the center pin main body 61 and a lift 64 provided at the lower end of the center pin main body 61. The mounting arm 62 is employed for mounting the transverse vibration damper 98. The lift 64 is employed for contacting the crossbeam 2 during lifting the car body, so as to realize the lifting function of the bogie frame.

Specifically, the center pin main body 61 may include a columnar structure and a car body connecting arm. The upper end of the columnar structure can be provided with two transition sections relatively arranged. The transition section can have a curved shape, for smooth connecting with the connecting arm of the car body. The connecting arm of the car body is connected to the transition section of the columnar structure, and the connecting arms of the car body are respectively located on two sides of each transition section along the longitudinal direction. A bolt hole is disposed on the side of the connecting arm of the car body away from the transition section. The connecting arm of the car body is employed for connecting with the car body.

The lower end of the columnar structure may have corresponding mounting arms 62 for mounting the transverse vibration damper 98. The mounting arm 62 is located relatively below the longitudinal stopper 65. The mounting arm 62 is fastened to the transverse vibration damper 98 by bolts.

Exemplarily, two pairs of the mounting arms 62 are respectively provided on corresponding two sides of the center pin main body 61. Each pair of mounting arms 62 has two oppositely disposed mounting arms. A joint at the end of the transverse vibration damper 98 is interposed between two opposite mounting arms 62 in the one pair. Each mounting arm 62 is provided with a mounting hole which can be aligned with a bolt hole at the joint at the end of the corresponding transverse vibration damper 98. The bolt hole is disposed through in the direction perpendicular to the axial direction of the transverse vibration damper 98.

The second fixing bolt 99 has a second screw 993 disposed through the bolt hole of the transverse vibration damper 98 and the mounting hole of the mounting arm 62. One end of the second screw 993 is provided with a second bolt head 991 having a cross-sectional area larger than the second screw 993. The second bolt head 991 has at least one of the second side plane 992. For example, the second bolt head 991 includes four side surfaces, two facing side surfaces are curved surfaces, and the other two facing side surfaces are plane surfaces.

The traction center pin 6 is further provided with a limiting surface 63, at least part of which is a plane surface for contacting with the side plane surfaces of the second bolt head 991. Exemplarily, of two opposite mounting arms 62 in the one pair, an outer surface of one mounting arm 62 away from the other mounting arm 62 is disposed inwardly with respect to a corresponding side surface of the center pin main body 61, a connecting surface is connected between the outer surface of the mounting arm 62 and the corresponding side surface of the center pin main body 61, and at least part of the connecting surface forms the limiting surface 63. In other words, the mounting arm 62 and the center pin main body 61 form a step-like structure. The outer surface of the mounting arm 62 is a first step surface, the corresponding side surface of the center pin main body 61 is a second step surface, and the connecting surface connecting the first step surface and the second step surface is at least partially formed with the limiting surface 63.

In this example, the limiting surface 63 of the traction center pin 6 can face-to-face contact with the second side plane 992 thereby forming a loosening prevention structure for preventing loosening of the second fixing bolt 99. Thus, in a case where the second fixing bolt 99 is impacted and has a tendency to rotate, the limiting surface 63 of the traction center pin 6 can counteract the impact force driving the rotation of the second fixing bolt 99 by applying a force on the side plane of the bolt head, thereby preventing the second fixing bolt 99 from loosening and ensuring the connection reliability between the traction center pin 6 and the transverse vibration damper 98.

Alternatively, the second fixing bolt 99 further includes a second nut 995 matched with the second screw 993. The second nut 995 is located at the end of the second screw 993 corresponding to the second bolt head 991. The bogie frame further includes a third adjusting gasket 994 which is located between the second nut 995 and the corresponding mounting arm 62. The third adjusting gasket 994 is employed for adjusting the spacing between the nut end and the corresponding mounting arm 62.

The lift 64 is connected to the center pin main body 61 by a plurality of threaded pins arranged at intervals. Exemplarily, the threaded pins can be two. The threaded pin can be disposed between two pairs of mounting arms 62. The center pin main body 61 is provided with a mating hole 61b matched with the threaded pin. In the vertical direction, the mating hole 61b can be provided close to the threaded hole of the mounting arm 61 to facilitate a more compact structure of the traction center pin 6. Exemplarily, the center of the mating hole 61b can be in the same line as the center of the bolt hole on the mounting arm 62. The center of the mating hole 61b can be higher than the center of the bolt hole on the mounting arm 62.

The lift 64 includes a lift mounting main body 641 and a lift stopper block 642. The lift mounting main body 641 is connected to the center pin main body 61. In a direction perpendicular to the axial direction of the center pin main body 61, two corresponding ends of the lift mounting main body 641 respectively are extended out of the center pin main body 61. The lift stopper block 642 is disposed at two corresponding ends of the lift mounting main body 641. The lift stopper block 642 is employed to abut the crossbeam during lifting the traction center pin 6.

In this example, under normal working conditions, there is a proper distance between the lift stopper block 642 and the crossbeam 2. During the lifting of the car body, the traction center pin 6 is lifted accordingly, and the lift stopper block 642 is contacted with the crossbeam 2 to realize the lifting function of the bogie frame. Further, the lift mounting main body 641 can be connected to the traction pin body by a plurality of bolts provided at intervals to further improve the reliability of the connection between the lift 64 and the traction center pin 6.

In addition, a second adjusting gasket 643 can be provided between the lifting stopper 642 and the lifting mounting body 641, and the second adjusting gasket 643 is employed for adjusting the spacing between the lift stopper block 642 of the lift 64 and the crossbeam 2. The adjusting gasket is designed as a multi-layer gasket. In a case where the wheel is worn, it is necessary to add gaskets under/above the empty spring to keep the height of the floor surface. Because the traction center pin 6 is respectively connected to the car body and the overall lift, the traction center pin 6 and the overall lift are lifted together with the car body, and the distance between the bottom of the crossbeam 2 and the lift 4 is reduced. By reducing the number of appropriate gaskets, the distance between the bottom of the crossbeam and the lift can maintain at the specified size.

Alternatively, two lift stopper blocks 642 and two pairs of mounting arms 62 are respectively provided on four sides of the center pin main body 61, so as to prevent the transverse vibration damper 98 and the lift 64 from interfering with each other.

The crossbeam provided by the embodiment provides interfaces for a plurality of components, integrates the arrangement of a plurality of components, and has a high degree of integration. Compared with the conventional bogie frame, a large number of components such as mounting seats are omitted, the number of components is reduced, the processing workload is reduced, and the production cost is reduced.

The bogie frame provided in the embodiment can be a non-powered bogie frame, as shown in Fig. 1. Alternatively, it can be a powered bogie frame: Fig. 44 is a perspective view of a powered bogie frame provided by the embodiment of the present disclosure. As shown in Fig. 44, if the traction motor 91 is provided on the wheelset, the bogie frame is a powered bogie frame, and the traction motor 91 can be a direct drive motor 91 of which rotor directly drives the shaft to rotate synchronously.

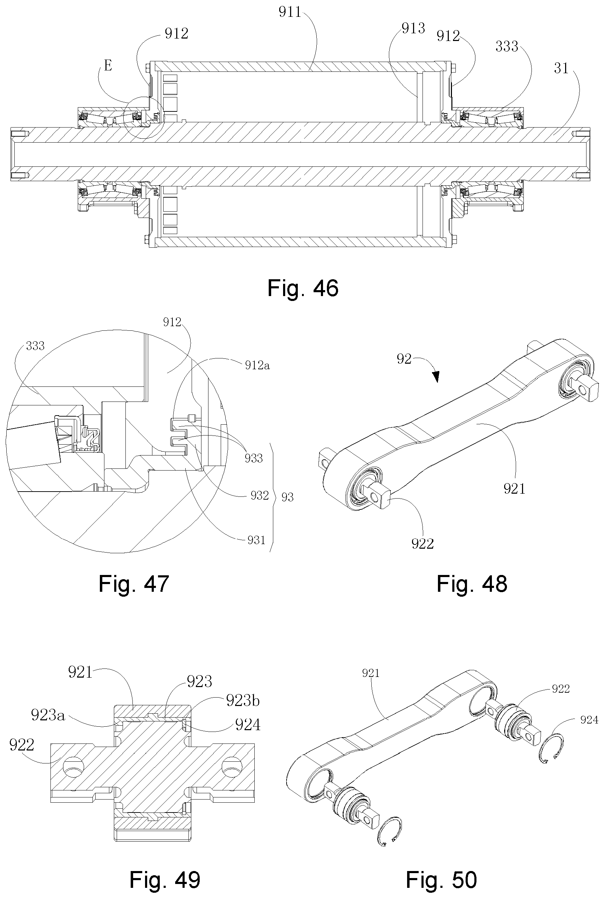

Fig. 45 is a schematic view of the connection between the direct drive motor and the shaft provided by the embodiment of the present disclosure. Fig. 46 is a sectional view of the direct drive motor and the shaft provided by the embodiment of the present disclosure. Fig. 47 is a partially enlarged schematic view of area E of Fig. 46. As shown in Figs. 45 to 47, the shaft box 33 is mounted to two ends of the shaft 31 by a seal bearing 333. The direct drive motor 91 has a stator 911, a rotor 913 mounted on the shaft 31, and an end cap 912. For example, the rotor 913 can be interference fitted with the shaft 31 and the rotor 913 can be rotated with the shaft 31 together. The stator 911 is mounted to the end cap 912 by a plurality of fixing bolts and can be supported by an inner periphery of the end cap 912. The end cap 912 is connected to the shaft box 33. One end of the dustproof retaining ring 925 is connected to the seal bearing 333 and the other end is connected to the end cap 912 and forms a labyrinth seal with the end cap 912.

The end cap 912 includes a cap plate, the cap plate is provided with an inner periphery projecting inward toward the inner side of the other end cap 912, the outer diameter of the inner periphery is smaller than the outer diameter of the cap plate, the end of the stator 911 is sleeved on the inner periphery, and a plurality of fixing bolts arranged at intervals pass through the cap plate and the stator 911 to screw the stator 911 with the cap plate, thereby reliably detachable connecting the stator 911 with the end cap 912.

The end cap 912 is also connected to the shaft box 33 by a plurality of the fixing bolts arranged at intervals. The fixing bolts connected to the shaft box 33 on the end cap 912 is located on the inner ring of the fixing bolts connected to the stator 911, that is, the fixing bolts connected to the shaft box 33 on the end cap 912 is closer to the center of the end cap 912 than the fixing bolts connected to the stator 911. At least one adjusting gasket is provided between the end cap 912 and the shaft box 33, the number of which can be designed according to actual needs, and the adjusting gasket can adjust the gap between the shaft box 33 and the end cap 912.

The stator 911 is fixed to the shaft box 33 with the end cap 912. There can be relative rotation between the stator 911 and the rotor 913. The electromagnetic torque can be generated between the stator 911 and the rotor 913, so that the rotor 913 can rotate the shaft 31. Exemplarily, the stator 911 includes a housing and a magnetic pole mounted on the housing or an armature core provided with an armature winding. For example, the stator 911 may include a housing and magnetic poles mounted with the housing. Accordingly, the rotor 913 includes an armature core provided with an armature winding. Alternatively, the stator 911 includes a housing and an armature core provided with an armature winding, and the armature core provided with the armature winding is mounted to the housing. Accordingly, the rotor 913 includes magnetic poles.

The shaft box 33 is provided on the shaft 31 by a seal bearing 333, so that relative rotation can be generated between the shaft 31 and the shaft box 33. The seal bearing 333 includes an inner ring, a roller, an outer ring, and a sealer. The roller is disposed between the inner ring and the outer ring, a sealer is disposed at the joint of the outer ring and the inner ring, and a labyrinth seal structure is formed between the outer ring, the sealer, and the inner ring, so as to effectively prevent self-lubricating oil from leaking into the direct drive motor 91, and prevent particulate matter such as dust generated during operation of the direct drive motor 91 from entering the seal bearing 333, thereby prolonging the service life of the seal bearing 333 and the direct drive motor 91 and reducing the maintenance cost of the railway vehicle.

One end of the shaft box 33 facing the end cap 912 is provided with a positioning ring. One end of the end cap 912 facing the shaft box 33 is provided with a mounting protrusion inserted in the positioning ring. Thus, the end cap 912 of the direct drive motor 91 is conveniently positioned relative to the shaft box 33 during assembly, and the end cap 912 is conveniently screwed with the shaft box 33 by the fixing bolt, and the connection reliability between the direct drive motor 91 and the shaft box 33 is ensured.

Further, as shown in Fig. 47, a dustproof retaining ring 925 is provided between the seal bearing 333 and the end cap 912, one end of the dustproof retaining ring 925 is positioned against the seal bearing 333, and the other end of the dustproof retaining ring 925 forms a labyrinth sealing structure with the end cap 912. Thus, a sealing structure is formed between the seal bearing 333 and the end cap 912, so that lubricating oil in the seal bearing 333 is further effectively prevented from leaking into the direct drive motor 91, and particulate matter such as dust generated during the operation of the direct drive motor 91 can be prevented from entering the seal bearing 333. Thus, the service life of the seal bearing 333 and the direct drive motor 91 is further prolonged, and the maintenance cost of the railway vehicle is reduced.

In one alternative implementation, the dustproof retaining ring 925 includes a mounting body 931, an extension ring 932, and a plurality of annular seal gears 933. The head end of the mounting body 931 is positioned against the seal bearing 333, and the tail end of the mounting body 931 is positioned between the end cap 912 and the shaft 31. The extension ring 932 is provided at the rear end of the mounting body 931 and is located inside the end cap 912 away from the shaft box 33. A plurality of annular seal gears 933 are provided on one side of the extension ring 932 facing the inner side wall of the end cap 912, and respectively cooperated with the slots provided on the inner side wall of the end cap 912, so as to form a labyrinth seal between the end cap 912 and the dustproof retaining ring 925.

In particular, the head end of the mounting body 931 can be abutted against the outer end surface of the seal bearing 333, or the head end of the mounting body 931 can be abutted between the seal bearing 333 and the shaft 31, so as to realize the sealing connection between the dustproof retaining ring 925 and the seal bearing 333.

The mounting body 931 can be sleeved at a corresponding position of the shaft 31. The mating section where the shaft 31 is matched with the dustproof retaining ring 925 includes a first portion and a second portion, and the first portion has a smaller outer diameter than the second portion. The shape of the mounting body 931 is adapted to the mating section, the top section of the mounting body 931 is matched with the first portion, and the tail end of the mounting body 931 is matched with the second portion. The first portion and the second portion of the mating section of the shaft 31 can have a smooth transition. There is a smooth transition between the head end and the tail end of the mounting body 931.

The rear end of the mounting body 931 is provided with the extension ring 932 extending upwardly, and the extension ring 932 is located inside the end cap 912 away from the seal bearing 333. The side of the extension ring 932 facing the inner side wall of the end cap 912 is provided with a plurality of annular seal gears 933 arranged at intervals, and the annular seal gears 933 are respectively matched with the slots 912a provided in the inner side wall of the end cap 912, so as to form a labyrinth seal between the end cap 912 and the dustproof retaining ring 925. The extension ring 932 is extended a preset distance in the radial direction thereof to facilitate the arrangement of the annular seal gears 933. The annular seal gears 933 are extended a preset distance along the axial direction thereof to facilitate the formation of a longer flowing channel.

The annular seal gears 933 of the dust retainer 925 and the slot 912a of the end cap 912 form a radial staggered labyrinth seal structure. Generally speaking, in a labyrinth seal structure, the friction resistance of the flowing channel is related to the length and sectional shape of the flowing channel. Specifically, the friction resistance of the flowing channel is proportional to the length of the flowing channel, and the friction resistance of the flowing channel is proportional to the sectional area of the flowing channel.

In the example, the radial rectangular staggered labyrinth with two pairs of staggered gears can be employed, which can increase the length of the flowing channel and increase the friction resistance, thus reducing the movement speed of lubricating oil or dust in the labyrinth seal structure.

In the example, a wide flowing channel and a narrow flowing channel are staggered and designed to further reduce the movement speed of lubricating oil or dust in the labyrinth seal structure. Taking lubricating oil as an example, under a certain flow rate, the flow rate of lubricating oil is inversely proportional to the sectional area. In a case where the lubricating oil passes through the narrow flowing channel, the flow rate increases, and after the narrow flowing channel, it is a wide flowing channel. The sectional area of the wide flowing channel increases and the flow rate slows down. In this way, the flowing channel has a narrow-wide varied cycling until the flow rate of lubricating oil is zero, so as to achieve the purpose of sealing.

Exemplarily, the annular seal gear 933 has two first surfaces extended in the axial direction and a second surface extended in the radial direction, the second surface being connected to the two first surfaces, the flowing channel formed between the first surface and the corresponding sidewalls of the gear groove slot 912a being relatively wide, and the flowing channel formed between the second surface and the corresponding sidewalls of the gear groove slot 912a being relatively narrow. The extension ring 932 has a third surface connected to the first surface of the annular seal gear 933, and the flow channel formed between the third surface and the inner sidewalls of the end cap 912 is a relatively narrow flowing channel. In this way, the narrow flowing channel and the wide flowing channel are staggered, that is, the narrow flowing channel and the wide flowing channel are cyclically varied, so that the movement speed of lubricating oil or dust in the labyrinth sealing structure is reduced, and the sealing purpose is achieved.

The labyrinth seal structure included in the seal bearing 333 may operate in a similar manner to the labyrinth seal structure formed by the dustproof retainer 925 and the end cap 912, and the present embodiment will not be described repeatedly in detail. In the example, the labyrinth sealing structure formed by the end cap 912 and the dustproof retaining ring 925 can prevent bearing damage caused by dust and dirt generated during the operation of the direct drive motor 91 entering the shaft box 33, thus prolonging the service life of the bearing. It is capable of preventing a small amount of grease or oil from leaking into the inside of the direct drive motor 91 by the labyrinth seal structure included in the seal bearing 333.

The bogie frame further includes a motor balancing link 92, one end of which is flexibly connected to the stator 911 of the direct drive motor 91, and the other end of which is flexibly connected to the secondary suspension mounting seat 8. In the implementation, the direct drive motor 91 can be connected to the secondary suspension mounting seat 8 by two motor balancing links 92. Specifically, one end of the two motor balancing links 92 is connected to the middle of the direct drive motor 91, and the other end of the two motor balancing links 92 is respectively connected to the secondary suspension mounting seat 8, so as to ensure the connection reliability between the direct drive motor 91 and the secondary suspension mounting seat 8.

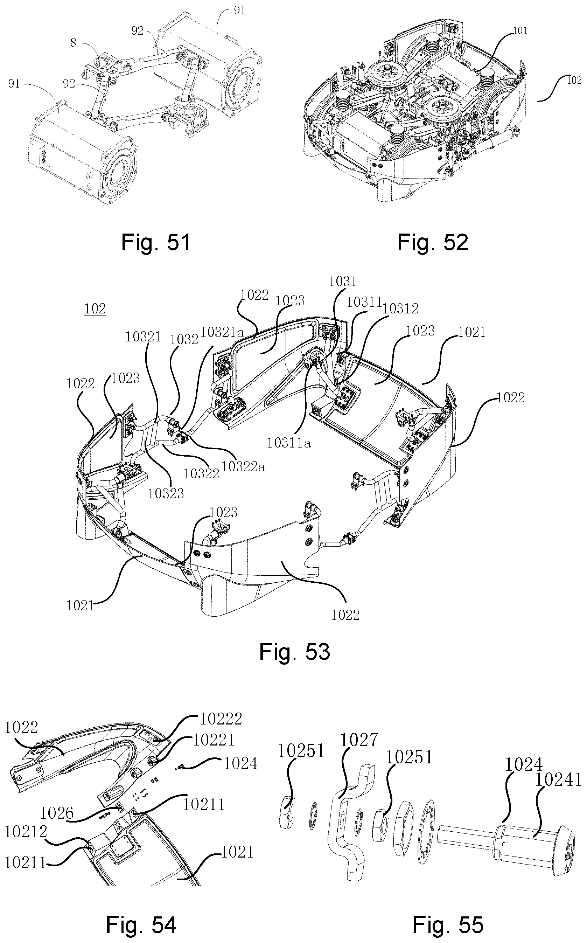

Fig. 48 is a perspective schematic view of a motor balancing link provided by the embodiment of the present disclosure. Fig. 49 is a sectional view of the connection between a rod body and a joint of a motor balancing link provided by the embodiment of the present disclosure. Fig. 50 is an exploded schematic view of the motor balancing link provided by the embodiment of the present disclosure. Fig. 51 is a structural schematic view of the connection between the secondary suspension mounting seat and the traction motor by the motor balancing link provided by the embodiment of the present disclosure. As shown in Figs. 48 to 51, the secondary suspension mounting seat 8 is provided with a motor mounting portion 89 to connect with the motor balancing link 92. The motor balancing link 92 includes a link body 921 and two elastic joints 922. Two elastic joints 922 are respectively disposed at two ends of the link body 921. One elastic joint 922 is connected to the stator 911 of the direct drive motor 91 and the other elastic joint 922 is connected to the secondary suspension mounting seat 8.

The link body 921 can be made of a carbon fiber material. Carbon fiber material has the advantages of high modulus, good design, compounding, light weight, high strength, high temperature resistance, and corrosion resistance. Therefore, the link body 921 made of carbon fiber material in the example has sufficient strength and high material utilization.

The link body 921 can be a non-uniform cross-section bar. The sectional area of the end of the link body 921 is larger than the sectional area of the middle of the link body 921. In the example, with the sectional area of the end of the link body 921 relatively large, the strength of the end of the link body 921 is high, which facilitates ensuring the reliability of the connection between the drive motor and the crossbeam. The link body 921 can be adapted to the distance between the direct drive motor 91 and the crossbeam by designing the middle of the link body 921. By designing the sectional area of the middle of the link body 921 relatively small, the cost of the motor balancing link 92 is reduced. The length of the middle of the link body 921 can be set according to actual needs.

The outer surface of the middle of the joint 922 is protruded from two ends of the joint 922. The middle of the joint 922 is connected to the link body 921. The middle of the joint 922 has an elastic portion formed by vulcanization of metal and rubber to achieve elastic connection. The outer ring of the middle of the joint 922 is transitionally matched with the link body 921, and the middle of the joint 922 can be pressed into a mounting hole at the end of the link body 921 by press fitting. Two ends of the joint 922 are connected to the stator 911 of the direct drive motor 91 or the crossbeam.

One end of the joint 922 at one end of the link body 921 can be connected to the stator 911 of the direct drive motor 91 by the fixing bolt and the adjusting gasket the number of which is adjustable, and/or one end of the joint 922 may also be connected to the stator 911 of the direct drive motor 91 by a threaded pin. The connection between the end of the joint 922 at the other end of the link body 921 and the crossbeam may be similar to the connection between the joint 922 and the stator 911 of the direct drive motor 91.

Further, a metal retaining ring 923 is embedded in the end of the link body 921. The metal retaining ring 923 has a mounting hole for mounting the joint 922. One end of the metal retaining ring 923 along the axial direction is provided with a positioning protrusion 923a which is provided on an inner hole wall of the mounting hole of the metal retaining ring 923 and is extended inward. The positioning protrusion 923a is located at one end of the middle of the joint 922 for limiting the middle of the joint 922 in the mounting hole of the metal retaining ring 923. The other end of the metal retaining ring 923 is provided with a slot 923b, and the slot 923b is provided on the inner hole wall of the mounting hole of the metal retaining ring 923. The motor balance link 92 further includes a spring collar 924, snapped into the slot 923b of the metal retaining ring 923. The spring collar 924 is located at the end of the middle of the joint 922 away from the positioning protrusion 923a. The spring collar 924 and the positioning protrusion 923a jointly position the middle of the joint 922 in the metal retaining ring 923 to prevent the middle of the joint 922 from being separated from the mounting hole of the metal retaining ring 923, thereby ensuring the connection reliability between the joint 922 and the link body 921 and the connection reliability between the direct drive motor 91 and the crossbeam 2.

During assembling the motor balance link 92, the middle of the joint 922 is pressed into the mounting hole of the metal retaining ring 923 at the end of the link body 921, and the middle of the joint 922 is brought into contact with the positioning protrusion 923a of the metal retaining ring 923, and then the spring collar 924 is snapped into the slot 923b of the metal retaining ring 923. The spring collar 924 is an elastic collar with an opening to facilitate the assembling of the spring collar 924. In the example, the direct drive motor 91 is flexibly connected to the crossbeam 2 through a motor balancing link 92 to buffer vibration and shock between the shaft 31 and the crossbeam 2.

Further, the bogie frame is further provided with a bogie frame chamber surrounded on the outside of the main structure of the bogie frame, for protecting the bogie frame to avoid sundries on the railway hitting the bogie frame, also for noise reduction and airflow guidance. Two ends of the brake hanging bracket 7 are provided with interfaces for connecting to the bogie frame chamber, such as chamber mounting holes 75, to connect to the bogie frame chamber by bolts.

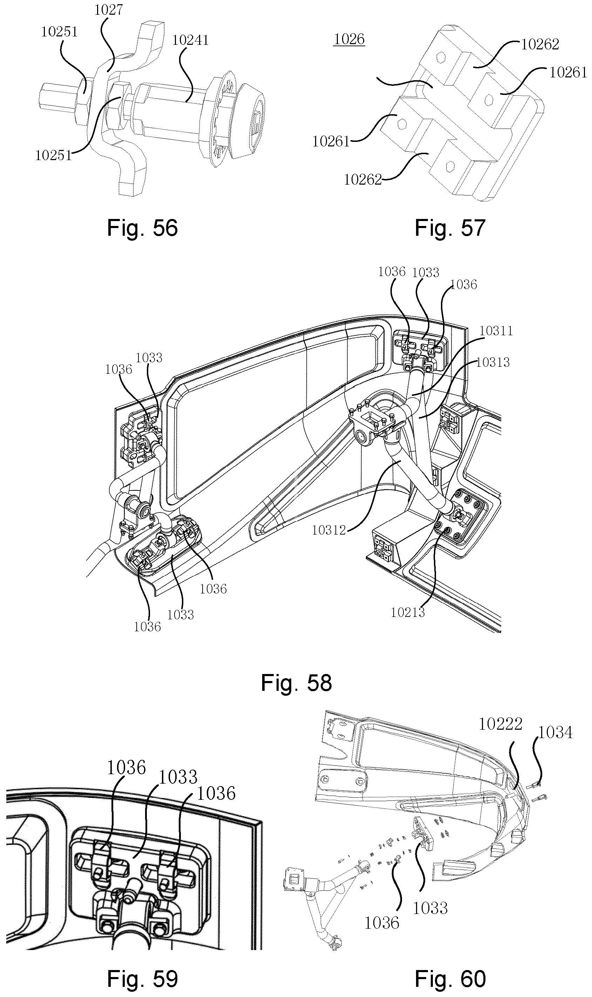

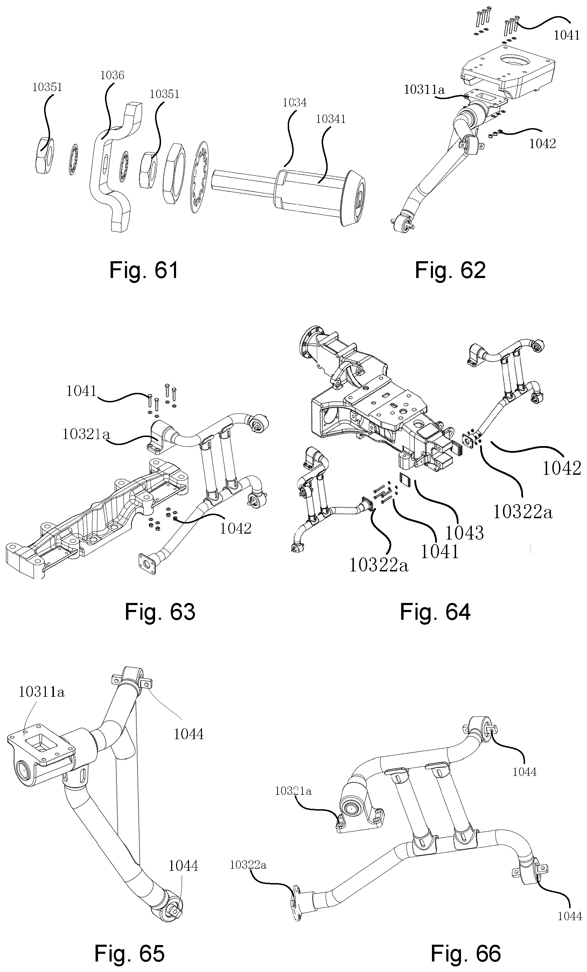

Fig. 52 is a schematic view of a bogie frame chamber and mounting of the bogie frame of a railway vehicle according to the embodiment of the present disclosure. Fig. 53 is a schematic view of the bogie frame chamber shown in Fig. 52. Fig. 54 is an exploded schematic view of the main chamber plate and the side chamber plate of the bogie frame chamber shown in Fig. 53. Fig. 55 is an exploded view of the connecting structure of the main chamber plate and the side chamber plate shown in Fig. 54. Fig. 56 is an assembly view of the connecting structure of the main chamber plate and the side chamber plate shown in Fig. 55. Fig. 57 is a schematic view of the anti-rotation seat of the bogie frame chamber shown in Fig. 54. Fig. 58 is a partially enlarged view of the bogie frame chamber shown in Fig. 53. Fig. 59 is a partially enlarged view of the bogie frame chamber shown in Fig. 58. Fig. 60 is an exploded schematic view of the side chamber plate and the first connecting frame of the bogie frame chamber shown in Fig. 53. Fig. 61 is an exploded view of the connecting structure of the side chamber plate, the first connecting frame, and the second connecting frame shown in Fig. 59. Fig. 62 is an exploded schematic view of the connection between the side chamber plate connecting rod of the first connecting frame and the primary spring fixing seat of the bogie frame. Fig. 63 is an exploded schematic view of the connection between the brake hanging bracket connecting rod of the second connecting frame and the brake device hanging bracket of the bogie frame. Fig. 64 is an exploded schematic view of the connection between the crossbeam connecting rod of the second connecting frame and the crossbeam of the bogie frame. Fig. 65 is a perspective view of the first connecting frame of the bogie frame chamber shown in Fig. 53. Fig. 66 is a perspective view of the second connecting frame of the bogie frame chamber shown in Fig. 54.

As shown in Figs. 52 to 66, the bogie frame chamber 102 includes a chamber body assembly, the chamber body assembly including a main chamber plate 1021, and two side chamber plates 1022. Two side chamber plates 1022 are fixed with two sides of the main chamber plate 1021 and form a recessed cavity with the main chamber plate 1021 for receiving the bogie frame 101 of the railway vehicle.

The inner side of the main chamber plate is fixed with the front or rear of the bogie frame, to separate the front or rear of the bogie frame from the outside. The inner sides of the two side chamber plates are fixed with the sides of the bogie frame to separate the sides of the bogie frame from the outside.

The main chamber plate and the two side chamber plates form a semi-enclosed structure which forms a recessed cavity for receiving the bogie frame of the railway vehicle. During assembling the bogie frame chamber and the bogie frame, the inner side of the main chamber plate is fixed with the front or rear of the bogie frame to separate the front or rear of the bogie frame from the outside, and the inner sides of the two side chamber plates are fixed with the side of the bogie frame to separate the side of the bogie frame from the outside. In this way, the chamber body assembly is connected to the bogie frame and covered the front or rear and the side of the bogie frame. The bogie frame chamber blocks the noise inside the bogie frame chamber from transmitting outward, which has the effect of reducing the far-field noise of the train. Moreover, guiding the airflow flowing along the outer surface of the bogie frame chamber, which reduces the airflow entering the bogie frame chamber and reduces the air resistance in the bogie frame area, thus improving the aerodynamic performance.

A first preset interval is maintained between the main chamber plate and the bogie frame, and a second preset interval is maintained between the side chamber plate and the bogie frame. In a case where the main chamber plate 1021 is fixed with the bogie frame specifically, the main chamber plate 1021 covers the inner edges of the two sidebeams of the bogie frame in the width direction and components located between the two sidebeams of the bogie frame in the height direction.

The bogie frame as a whole structure has a slightly lower middle and higher sides. The main chamber plate covers the lower middle portion of the bogie frame, that is, the inner edges of the two sidebeams of the bogie frame in the width direction and the components located between the two sidebeams of the bogie frame in the height direction. That is to say, the main chamber plate can cover the front or rear of the bogie frame, which avoids the front or rear of the bogie frame from being exposed to affect the aerodynamic performance. Moreover, the middle portion of the main chamber plate is slightly lower, which further avoids interference with the car body and the energy absorption device of the railway vehicle.

In a case where the side chamber plate 1022 is fixed with the bogie frame specifically, the side chamber plate 1022 covers the sidebeam of the bogie frame, and the side of the bogie frame in the width direction, upwardly covers the upper surface of the sidebeam of the bogie frame in the height direction, and downwardly covers the components mounted on the sidebeam of the bogie frame in the height direction. Two side chamber plates respectively cover the higher portion on two sides of the bogie frame. The side chamber plate can cover the front or rear and the side of the sidebeam of the bogie frame, which avoids the front or rear of the bogie frame being exposed to affect the aerodynamic performance.

The main chamber plate 1021 has a streamlined outer surface and the side chamber plate 1022 has a streamlined outer surface. The outer surface of the main chamber plate 1021 and the outer surface of the side chamber plate 1022 are employed to guide airflow flowing along the outer surface of the bogie frame chamber 102 and to reduce airflow entering into the bogie frame chamber 102. The outer surface of the main chamber plate 1021 and the outer surface of the side chamber plate 1022 are streamlined, which avoids the front or rear of the bogie frame from being exposed to the outside, reduces the exposed area of the side of the bogie frame, reduces the wind resistance, and avoids to affect the aerodynamic performance.

In a case where the side chamber plate is fixed with the bogie frame specifically, the side of the side chamber plate away from the main chamber plate covers the brake device of the bogie frame. The brake device is located at the middle outside of the bogie frame, and the side of the side chamber plate away from the main chamber plate covers the brake device of the bogie frame, which reduces the exposed area of the side of the bogie frame and has better aerodynamic performance. Moreover, the side chamber plate covers the brake device and separates the outside world, thus reducing the noise of the bogie frame.

The side chamber plate is further employed to guide the airflow entering the upper and/or lower ends of the main chamber plate to the brake device of the bogie frame to cool down the brake device. During the brake device operating, high heat and noise will be generated. The side chamber plate is designed with the structure to guide the airflow entering the upper and/or lower ends of the main chamber plate to the brake device of the bogie frame to cool down the brake device.

The bogie frame chamber further includes a sound-absorbing plate 1023 fixed on the inner of the main chamber plate and/or the inner of the side chamber plate.

The main chamber plate is made of lightweight composite material, and the side chamber plate is made of lightweight composite material. The lightweight composites include carbon fiber composites, glass fiber composites, and so on.

With the sound-absorbing plate, the noise generated by the bogie frame is absorbed by the sound-absorbing plate, so as to greatly reduce the noise of the bogie frame. The main chamber plate and the side chamber plate are made of lightweight composite material, and the weight of the bogie frame chamber is small.

The bogie frame chamber further includes a first connecting frame 1031 including a side chamber plate connecting rod 10311 and a main chamber plate connecting rod 10312. One end of the side chamber plate connecting rod 10311 is connected to the inner side of the side chamber plate 1022 by a rubber joint, and the other end of the side chamber plate connecting rod 10311 is provided with a primary fixing seat interface 10311a. One end of the main chamber plate connecting rod 10312 is connected to the inner side of the main chamber plate 1021 by a rubber joint, and the other end of the main chamber plate connecting rod 10312 is fixed with the side chamber plate connecting rod 10311. The primary fixing seat interface 10311a of the side chamber connecting rod is employed to connect with the primary spring fixing seat of the bogie frame.

With the first connecting frame as a whole structure, one end of the first connecting frame is connected to the primary suspension mounting seat 41 of the bogie frame by the first fixing seat interface of the side chamber plate connecting rod, the other end of the first connecting frame is connected to the inner side of the side chamber plate by the rubber joint through the side chamber plate connecting rod, and is connected to the inner side of the main chamber plate by the rubber joint through the main chamber plate connecting rod, thereby realizing the connection between the bogie frame, the main chamber plate and the side chamber plate. With the rubber joint, attenuating vibration of the bogie frame chamber during vehicle running.

The primary fixing seat interface 10311a of the side chamber plate connecting rod and the primary spring fixing seat of the bogie frame are fixedly connected by the fixing nuts and the fixing bolts. The side chamber connecting rod 10311 is higher than the main chamber plate connecting rod 10312.

The first connecting frame 1031 further includes a first connecting frame reinforcing rod 10313, one end of which is fixed with the side chamber connecting rod 10311, and the other end of which is fixed with the main chamber plate connecting rod 10312, to reinforce the strength of the first connecting frame 1031. The first connecting frame reinforcing rod makes the strength of the whole first connecting frame higher.

Specifically, the connection position between the main chamber plate connecting rod and the main chamber plate is located in the middle of the main chamber plate in the height direction. The connection position between the side chamber plate connecting rod and the side chamber plate is consistent with the height of the primary spring fixing seat of the bogie frame. The main chamber plate connecting rod and the side chamber plate connecting rod can be designed according to the bogie frame to keep distance from the bogie frame.

One end of the side chamber plate connecting rod away from the primary mounting seat interface 10311a is fixed with a rubber joint 1044 and is connected to the inner side of the side chamber plate 1022 by the rubber joint. One end of the main chamber plate connecting rod away from the primary fixing seat interface 10311a is fixed with the rubber joint 1044 and is connected to the inner side of the main chamber plate 1021 by the rubberjoint.

the bogie frame chamber further includes a second connecting frame 1032 including a brake hanging bracket connecting rod 10321, one end of which is connected to a position of the inner side of the side chamber plate away from the main chamber plate by a rubber joint, and the other end of which is provided with a brake hanging bracket interface 10321a. The brake hanging bracket interface 10321a of the brake hanging bracket connecting rod is employed to connect with the brake hanging bracket of the bogie frame. Specifically, the brake hanging bracket connecting rod is consistent with the height of the brake hanging bracket in the height direction, and the brake hanging bracket connecting rod has a simple structure and less material. The brake hanging bracket interface 10321a of the brake hanging bracket connecting rod and the brake hanging bracket are fixedly connected by the fixing bolt 1041 and the fixing nut 1042.

The second connecting frame further includes a crossbeam connecting rod 10322, one end of which is connected to a position of the inner side of the side chamber plate 1022 away from the main chamber plate 1021 by a rubber joint, and the other end of which is provided with a crossbeam interface 10322a. The crossbeam connecting rod 10322 is located below the brake hanging bracket connecting rod 10321. The crossbeam interface 10322a of the crossbeam connecting rod 10322 is employed to connect with the crossbeam of the bogie frame. Specifically, the crossbeam connecting rod 10322 is consistent with the height of the crossbeam of the bogie frame in the height direction, and the crossbeam connecting rod 10322 has a simple structure and less material.

The crossbeam interface 10322a of the crossbeam connecting rod 10322 and the crossbeam of the bogie frame are fixedly connected by the fixing bolt 1041, the gasket 1043, and the fixing nut 1042. One end of the crossbeam connecting rod 10322 away from the crossbeam interface 10322a is fixed with the rubber joint 1044 and is connected to the inner side of the side chamber plate 1022 by the rubber joint 1044.

One end of the brake hanging bracket connecting rod 10321 away from the brake hanging bracket interface 10321a is fixed with the rubber joint 1044, and is connected to the inner side of the side chamber plate through the rubber joint 1044.

The second connecting frame 1032 further includes a second connecting frame reinforcing rod 10323, one end of which is fixed with the brake hanging bracket connecting rod 10321, and the other end of which is fixed with the crossbeam connecting rod. The second connecting frame reinforcing rods 10323 are two and arranged in parallel. The second connecting frame reinforcing rod 10323 makes the strength of the whole second connecting frame 1032 higher.

With the second connecting frame as a whole structure, one end of the second connecting frame is connected to the bogie frame by the brake hanging seat interface and the crossbeam interface, and the other end of the second connecting frame is connected to the side chamber plate by the brake hanging seat connecting rod and the crossbeam connecting rod through the rubber joint, thus realizing the connection between the bogie frame and the side chamber plate. With the rubber joint, attenuating vibration of the bogie frame chamber during vehicle running.

In practice, the chamber body assemblies are two, and the crossbeam interfaces 10322a of the two crossbeam connecting rods are connected, and the connection is further to connect with the crossbeam of the bogie frame, so as to save space for connecting with the crossbeam.

Two sides of the main chamber plate 1021 are respectively provided with the main chamber plate through holes 10211. The side of the side chamber plate near the main chamber plate has a step hole-shaped side chamber plate through hole 10221, and the larger diameter section is away from the main chamber plate 1021 and the hole wall is an anti-rotation polygon structure.

One end of the screw of the first anti-rotation bolt 1024 near the head is formed with a first anti-rotation platform 10241 in the shape of a straight prism. The screw of the first anti-rotation bolt 1024 passes through the side chamber plate through hole 10221 and the main chamber plate through hole 10211, and the first anti-rotation platform 10241 is snapped into a section with a larger diameter of the side chamber plate through hole 10221, and is matched with the first anti-rotation nut 10251 to fix the main chamber plate 1021 and the side chamber plate 1022.

The outer peripheral surface of the straight prism of the first anti-rotation platform of the first anti-rotation bolt is matched with the hole wall shape of the section with a larger diameter of the side chamber plate through hole, so that the straight prism of the first anti-rotation platform is snapped into the section with a larger diameter of the side chamber plate, to prevent rotation of the first anti-rotation platform inside the side chamber plate through hole and improve the stability. The head of the first anti-rotation bolt is snapped into one side of the side chamber plate through hole. Specifically, the size of the first anti-rotation platform in the axial direction perpendicular to the first anti-rotation bolt is larger than the diameter of the screw of the first anti-rotation bolt.

the main chamber plate includes a main chamber plate mounting seat, and the main chamber plate mounting seat includes: a main chamber plate mounting seat body 10212 formed on two sides of the main chamber plate 1021; and an anti-rotation seat 1026 fixed with the main chamber plate mounting seat body 10212, and a first anti-rotation flexible strip 1027. The anti-rotation seat 1026 is provided with two anti-rotation protruding bars 10261 arranged facing each other. The main chamber plate through hole 10211 is arranged between the two anti-rotation protruding bars 10261 and penetrates the main chamber plate mounting seat body 10212 and the anti-rotation seat 1026. The middle of the anti-rotation protruding bars 10261 is provided with an anti-rotation recess 10262. The first anti-rotation flexible strip 1027 has a circular through hole. The screw of the first anti-rotation bolt 1024 further passes through the circular through hole of the first anti-rotation flexible strip 1027, the first anti-rotation nuts 10251 are respectively pressed on the two sides of the first anti-rotation flexible strip 1027, and the two ends of the first anti-rotation flexible strip 1027 are respectively snapped into the anti-rotation recess 10262.

The first anti-rotation flexible strip can produce certain elastic deformation, so that the first anti-rotation flexible strip can adapt to certain deformations and attenuate certain vibrations. The anti-rotation recess of the anti-rotation protruding bar and the cooperation of the first anti-rotation flexible strip realize the anti-rotation at one end of the screw of the first bolt, so that the fixation of the main chamber plate and the side chamber plate is more stable.

Specifically, the anti-rotation seat is fixed with the main chamber plate mounting seat body by bolts and gaskets. The advantage of setting the anti-rotation seat relatively independently is that after the anti-rotation seat is damaged by force, only need to replace the anti-rotation seat, and the main chamber plate is not affected.

The main chamber plate through hole 10211 has an elongated shape. The advantage of the elongated shaped main chamber plate through hole is that the machining accuracy of which is lower and the assembly is easier to realize.

The first anti-rotation flexible strip 1027 has an omega shape, two flanges at two bottom ends of the first anti-rotation flexible strip 1027 are respectively snapped into two anti-rotation recesses 10262, and a circular through hole of the first anti-rotation flexible strip 1027 is provided at the cross arm at the top end of the first anti-rotation flexible strip. The omega shaped first anti-rotation flexible strip can provide elastic deformation of movement, which can adapt to certain deformation and attenuate certain vibrations. Specifically, the gasket is further disposed between the first anti-rotation nut 10251 and the first anti-rotation flexible strip 1027.

A plurality of main chamber plate mounting seat bodies 10212 are provided at intervals from top to bottom on two sides of the main chamber plate 1021. The number of anti-rotation seats 1026, the first anti-rotation flexible strips 1027, and the side chamber plate through holes 10221 are matched with the number of main chamber plate mounting seats. Specifically, three main chamber plate mounting seats are disposed at intervals from top to bottom on two sides of the main chamber plate 1021. The number of the main chamber plate mounting seats disposed at intervals from top to bottom on two sides of the main chamber plate is selected according to the actual situation.

The bogie frame further includes an anti-rotation mounting structure including an anti-rotation protruding seat 10222 formed at the inner side of the chamber plate and having a step hole, an anti-rotation indenting seat 1033 and a second anti-rotation bolt 1034. The hole wall of a section with a larger diameter in the step hole of the anti-rotation protruding seat is an anti-rotation polygon structure. The chamber plate includes the main chamber plate 1021 and the side chamber plate 1022. The anti-rotation indenting seat 1033 is provided with a through hole, and the anti-rotation indenting seat 1033 is fastened on the anti-rotation protruding seat. One end of the screw of the second anti-rotation bolt 1034, near the head is formed with a second anti-rotation platform 10341 in the shape of a straight prism. The screw of the second anti-rotation bolt 1034 passes through the step hole of the anti-rotation protruding seat 10222 and the through hole of the anti-rotation indenting seat 1033, and the second anti-rotation platform 10341 is snapped into a section with a larger diameter in the step hole of the anti-rotation protruding seat 10222, and is cooperated with the second anti-rotation nut 10351 to fix the anti-rotation protruding seat and the chamber plate.

The straight prism of the second anti-rotation platform of the second anti-rotation bolt is matched with the hole wall shape of the section with a larger diameter of the step hole of the anti-rotation protruding seat, so that the straight prism of the second anti-rotation platform is snapped into the section with a larger diameter of the step hole of the anti-rotation protruding seat, to prevent rotation of the straight prism of the second anti-rotation platform inside the step hole and improve the stability. The head of the second anti-rotation bolt is snapped into the other side of the chamber plate. Specifically, the anti-rotation protruding seat and the chamber plate are integrated structures.

the anti-rotation protruding seat 10222 has a rectangular shape, and the anti-rotation indenting seat 1033 has a rectangular shape. In a case where the anti-rotation indenting seat 1033 is fastened on the anti-rotation protruding seat 10222, the anti-rotation indenting seat 1033 cannot rotate relative to the anti-rotation protruding seat 10222 due to the rectangular shapes. Two anti-rotation grooves are provided symmetrically on the side of the anti-rotation indenting seat 1033 away from the anti-rotation protruding seat 10222.

The second anti-rotation flexible strip 1036 has a circular through hole. The screw of the second anti-rotation bolt 1034 further passes through the circular through hole of the second anti-rotation flexible strip 1036, the second anti-rotation nuts 10351 are respectively pressed on two sides of the second anti-rotation flexible strip plate 1036, and the second anti-rotation flexible strip 1036 is snapped into the anti-rotation grooves. The second anti-rotation flexible strip can produce certain elastic deformations, so that the anti-rotation mounting structure can adapt to certain deformations and alleviate certain vibrations. The anti-rotation groove of the anti-rotation indenting seat and the cooperation of the second anti-rotation flexible strip realize the anti-rotation at one end of the screw of the second bolt, so that the fixing of the chamber plate and the anti-rotation mounting structure is more stable. The through hole of the anti-rotation indenting seat has an elongated shape, which requires lower machining accuracy and is easier to assemble.

The second anti-rotation flexible strip 1036 has an omega shape, two flanges of the bottom end of the second anti-rotation flexible strip 1036 are respectively snapped into two anti-rotation grooves, and a circular through hole of the second anti-rotation flexible strip is disposed at the cross arm of the top end of the second anti-rotation flexible strip. The omega shaped second anti-rotation flexible strip can provide elastic deformation of movement, which can adapt to certain deformation and attenuate certain vibrations. Specifically, a gasket is further disposed between the second anti-rotation nut and the second anti-rotation flexible strip.

The anti-rotation mounting structures are provided at positions where the side chamber plate 1022 is connected to the side chamber connecting rod 10311 of the first connecting frame, where the side chamber plate 1022 is connected to the brake hanging bracket connecting rod 10321 of the second connecting frame, and where the side chamber plate 1022 is connected to the crossbeam connecting rod 10322 of the second connecting frame. The side chamber connecting rod 10311, the brake hanging bracket connecting rod 10321 and the crossbeam connecting rod 10322 are each connected to the anti-rotation mounting structure at respective positions. The anti-rotation mounting structure realizes safe and reliable connection, quick disassembly and assembly, can adapt to certain deformations, and alleviate certain vibrations.

The side chamber plate connecting rod 10311 of the first connecting frame is connected to the side chamber plate 1022 by the anti-rotation mounting structure, the anti-rotation protruding seat 10222 is formed on the inner side of the side chamber plate 1022, and the anti-rotation protruding seat 10222 has two step holes arranged in parallel. Correspondingly, the anti-rotation indenting seat 1033 further has two elongated through holes disposed in parallel transversely, two second anti-rotation flexible strip 1036, and two second bolts. The side chamber plate connecting rod 10311 of the first connecting frame is connected under two elongated through holes disposed in parallel in the transverse direction of the anti-rotation recess 1033 by a rubber joint. The lateral force applied on the side chamber plate connecting rod of the first connecting frame is larger, and the two elongated shaped through holes of the anti-rotation indenting seat are disposed transversely in parallel, so that the force applied on the side chamber plate connecting rod is more dispersed.

the bogie frame chamber further includes a chamber plate connecting rod mounting seat 10213 fixed with the inner side of the main chamber plate 1021 by bolts, steel wire threads, and gaskets, and the main chamber plate connecting rod 10312 of the first connecting frame is fixed with the chamber plate connecting rod mounting seat by a rubber joint, so that the main chamber plate connecting rod 10312 and the main chamber plate 1021 are stably connected.

The brake hanging bracket connecting rod 10321 of the second connecting frame is connected to the side chamber plate 1022 by the anti-rotation mounting structure, and the anti-rotation protruding seat 10222 is formed inside the side chamber plate 1022, and the anti-rotation protruding seat 10222 has two circular through holes in the shape of step holes arranged in parallel upper and lower. Correspondingly, the anti-rotation indenting seat 1033 further has two elongated through holes disposed in parallel upper and lower, two second anti-rotation flexible strip 1036, and two second anti-rotation bolts 1034. The brake hanging bracket connecting rod 10321 of the second connecting frame is connected between two elongated through holes disposed in parallel upper and lower of the anti-rotation indenting seat 1033 by a rubber joint.

The crossbeam connecting rod 10322 of the second connecting frame is connected to the side chamber plate 1022 by the anti-rotation mounting structure, and the anti-rotation protruding seat 10222 is formed on the inner side of the side chamber plate 1022, and the anti-rotation protruding seat 10222 has two circular through holes in the shape of step holes disposed in parallel back and forth. Correspondingly, the anti-rotation indenting seat 1033 further has two elongated through holes disposed in parallel back and forth, two second anti-rotation flexible strips 1036, and two second anti-rotation bolts 1034. The crossbeam connecting rod 10322 of the second connecting frame is connected between two elongated through holes disposed in parallel back and forth of the anti-rotation indenting seat 1033 by a rubber joint. The two parallel elongated through holes of the anti-rotation indenting seat 1033 is disposed with considering the direction of the force applied by the connecting rod to which is connected, and further to consider the spatial characteristics of the position of the anti-rotation indenting seat 1033.

## Claims

1. A bogie frame, comprising:
a crossbeam (2), extended transversely and including two crossbeam single-structures symmetrically disposed and connected with each other and forming a traction device mounting space between the two crossbeam single-structures;
two secondary suspension mounting seats (8), symmetrically disposed on the top surface of the crossbeam (2);
two sidebeams (1), extended in a longitudinal direction, wherein the two sidebeams (1) are disposed side-by-side;
a wheelset (3), symmetrically disposed below the sidebeam (1) and including a shaft (31), wheels (32) symmetrically disposed on the shaft (31), and shaft boxes (33) symmetrically disposed on the shaft (31);
a primary suspension device (4), disposed between the sidebeam (1) and the shaft box (33);
a secondary suspension device, disposed on the secondary suspension mounting seat (8);
a traction device, the bottom end thereof inserted in the traction device mounting space between the two crossbeam single-structures; and
a brake device, disposed on the crossbeam (2) and is employed to apply braking operation on the wheels (32);
**characterized in that**
two mounting channels passing through along the longitudinal direction are formed between the secondary suspension mounting seats (8) and the crossbeam (2), the longitudinal direction and a transverse direction are two horizontal directions perpendicular to each other, and each of the sidebeams (1) is disposed in one of the mounting channels.

2. The bogie frame according to claim 1, further comprising:
a direct drive motor (91), connected between the shaft box (33) and the secondary suspension mounting seat (8), wherein a rotor (913) of the direct drive motor (91) is fixedly connected with the shaft (31) and rotates synchronously.

3. The bogie frame according to claim 1, wherein the sidebeam (1) comprises:
a main sidebeam plate (11), made of elastic composite fiber material;
an auxiliary sidebeam plate (12), made of elastic composite fiber material and stacked above the main sidebeam plate (11), wherein the middle bottom surface of the auxiliary sidebeam plate (12) is in contact with the top surface of the main sidebeam plate (11), and there is a buffer gap (14) between the bottom surfaces of two ends of the auxiliary sidebeam plate (12) and the top surface of the main sidebeam plate (11); and
an elastic stopper (13), disposed at the end of the auxiliary sidebeam plate (12) and is located in the buffer gap (14), wherein in case where the middle of the sidebeam (1) bears a first vertical load, there is a gap between the elastic stopper (13) and the top surface of the main sidebeam plate (11), in case where the middle of the sidebeam (1) bears a second vertical load, the main sidebeam plate (11) and the auxiliary sidebeam plate (12) have elastic deformation until the elastic stopper (13) contacts the top surface of the main sidebeam plate (11), and the second vertical load is greater than the first vertical load; wherein the first vertical load and the second vertical load are from the auxiliary sidebeam plate (12) to press downward.

4. The bogie frame according to claim 1, wherein the crossbeam single-structure comprises:
a crossbeam main body (21), wherein the inner end surface of the crossbeam main body (21) facing another crossbeam single-structure has a first mounting area and a second mounting area, the middle top surface of the crossbeam main body (21) is provided with a sidebeam mounting interface for assembling with the sidebeam (1) of the bogie frame;
a crossbeam connecting arm (22), extended in a direction parallel to the crossbeam main body (21), wherein one end of the crossbeam connecting arm (22) is fixed to the first mounting area of the crossbeam main body (21), and the other end of the crossbeam connecting arm (22) is connected to the second mounting area of the crossbeam main body (21) of another crossbeam single-structure by a crossbeam connecting device.

5. The bogie frame according to claim 4, wherein the width of the end of the crossbeam main body (21) facing the other crossbeam single-structure is greater than the width of the middle of the crossbeam main body (21), the first mounting area and the second mounting area are respectively located at two ends of the inner end surface of the crossbeam main body (21) along the width direction; and a gap is formed between the two crossbeam connecting arms (22) for receiving the traction center pin of the bogie frame.

6. The bogie frame according to claim 1, wherein the traction device comprises:
a traction center pin (6) having a center pin main body (61) inserted in a mounting space between the two crossbeam single-structures;
a longitudinal stopper (65), disposed between the crossbeam single-structure and the center pin main body (61); and
a lift (64), disposed at the lower end of the center pin main body (61).

7. The bogie frame according to claim 6, wherein the lift (64) comprises:
a lift mounting main body (641) connected with the center pin main body (61), wherein in a direction perpendicular to the axial direction of the center pin main body (61), two corresponding ends of the lift mounting main body (641) respectively are extended out of the center pin main body (61);
a lift stopper block (642), disposed at two corresponding ends of the lift mounting main body (641), wherein the lift stopper block (642) is employed to abut the crossbeam (2) during lifting the traction center pin (6).

8. The bogie frame according to claim 7, further comprising: a transverse vibration damper (98) and a first fixing bolt (94);
wherein the traction center pin (6) has two mounting arms (62) correspondingly disposed, the end of the transverse vibration damper (98) is mounting between the two corresponding mounting arms (62), the mounting arms (62) are provided with mounting holes, the traction center pin (6) is provided with a limiting surface (63) partial being plane;
wherein the first fixing bolt (94) is provided with a first screw (943) and a first bolt head (941) disposed at one end of the first screw (943), the first screw (943) is matched with the mounting hole and the bolt hole and the side plane of the first bolt head (941) is abutted with the limiting surface (63).

9. The bogie frame according to claim 1, further comprising: a vertical vibration damper (93) and a second fixing bolt (99);
wherein the crossbeam single-structure is provided with a vertical vibration damper mounting lug (214) provided with a mounting hole and a limiting surface partial being plane;
wherein the second fixing bolt (99) is provided with a second screw (993) and a second bolt head (991) disposed at one end of the second screw (993), the second screw (993) is disposed by the mounting hole and the bolt hole, and the side plane of the second bolt head (991) is abutted with the limiting surface.

10. The bogie frame according to claim 2, further comprising:
a seal bearing (333), disposed between the shaft (31) and the shaft box (33);
a dustproof retaining ring (925), wherein one end of the dustproof retaining ring (925) is connected with the seal bearing (333), the other end of the dustproof retaining ring (925) is connected with an end cap (912) of the direct drive motor (91) to form a labyrinth seal with the end cap (912).

11. The bogie frame according to claim 10, wherein the dustproof retaining ring (925), comprises:
a mounting body (931), wherein the head end thereof is disposed between the seal bearing (333) and the shaft (31), and the tail end is disposed between the end cap (912) and the shaft (31);
an extension ring (932), provided at the rear end of the mounting body (931) and located inside the end cap (912) away from the shaft box (33); and
a plurality of annular seal gears (933), provided on one side of the extension ring (932) facing the inner side wall of the end cap (912), and respectively cooperated with the slots provided on the inner side wall of the end cap (912), so as to form a labyrinth seal between the end cap (912) and the dustproof retaining ring (925).

12. The bogie frame according to claim 2, further comprising:
a motor balancing link (92), wherein one end of the motor balancing link (92) is flexibly connected with the direct drive motor (91) and the other end is flexibly connected with the secondary suspension mounting seat (8).

13. The bogie frame according to claim 12, wherein the motor balancing link (92) comprising: a link body (921) and two elastic joints (922), two elastic joints (922) are respectively disposed at two ends of the link body (921), one elastic joint (922) is connected to a stator (911) of the direct drive motor (91), and the other elastic joint (922) is connected to the secondary suspension mounting seat (8);
wherein a metal retaining ring (923) is embedded in the end of the link body (921) and has a mounting hole for mounting the elastic joints (922).

14. The bogie frame according to claim 9, wherein the vertical vibration damper mounting lug (214) for connecting with the vertical vibration damper (93) is provided on the side surface of the crossbeam main body (21).

15. A railway vehicle comprising: a bogie frame according to any one according to claims 1 to 14.

## Patentansprüche

1. Drehgestellrahmen, der aufweist:
einen Querträger (2), der sich in Querrichtung erstreckt und zwei Querträger-Einzelstrukturen aufweist, die symmetrisch angeordnet und miteinander verbunden sind und zwischen den beiden Querträger-Einzelstrukturen einen Montageraum für die Zugvorrichtung bilden;
zwei Sekundäraufhängungsmontagesitze (8), die symmetrisch auf der Oberseite des Querträgers (2) angeordnet sind;
zwei Längsträger (1), die sich in Längsrichtung erstrecken, wobei die beiden Längsträger (1) nebeneinander angeordnet sind;
einen Radsatz (3), der symmetrisch unter dem Längsträger (1) angeordnet ist und eine Welle (31), Räder (32), die symmetrisch auf der Welle (31) angeordnet sind, und Wellenkästen (33) aufweist, die symmetrisch auf der Welle (31) angeordnet sind;
eine primäre Aufhängungsvorrichtung (4), die zwischen dem Längsträger (1) und dem Wellenkasten (33) angeordnet ist;
eine sekundäre Aufhängungsvorrichtung, die auf dem Sekundäraufhängungsmontagesitz (8) angeordnet ist;
eine Zugvorrichtung, deren unteres Ende in den Montageraum für die Zugvorrichtung zwischen den beiden Querträger-Einzelstrukturen eingesetzt ist; und
eine Bremsvorrichtung, die auf dem Querträger (2) angeordnet ist und dazu dient, einen Bremsvorgang auf die Räder (32) auszuüben;
**dadurch gekennzeichnet, dass**
zwei entlang der Längsrichtung durchgehende Montagekanäle zwischen den Sekundäraufhängungsmontagesitzen (8) und dem Querträger (2) ausgebildet sind, die Längsrichtung und eine Querrichtung zwei horizontale, zueinander senkrechte Richtungen sind und jeder der Längsträger (1) in einem der Montagekanäle angeordnet ist.

2. Drehgestellrahmen nach Anspruch 1, der ferner aufweist:
einen Direktantriebsmotor (91), der zwischen dem Wellenkasten (33) und dem Sekundäraufhängungsmontagesitz (8) angeschlossen ist, wobei ein Rotor (913) des Direktantriebsmotors (91) fest mit der Welle (31) verbunden ist und sich synchron dreht.

3. Drehgestellrahmen nach Anspruch 1, wobei der Längsträger (1) aufweist:
eine Hauptlängsträgerplatte (11) aus elastischem Faserverbundwerkstoff;
eine Hilfslängsträgerplatte (12), die aus elastischem Faserverbundwerkstoff hergestellt und über der Hauptlängsträgerplatte (11) gestapelt ist, wobei die mittlere Unterseite der Hilfslängsträgerplatte (12) in Kontakt mit der Oberseite der Hauptlängsträgerplatte (11) ist und es einen Pufferspalt (14) zwischen den Unterseiten von zwei Enden der Hilfslängsträgerplatte (12) und der Oberseite der Hauptlängsträgerplatte (11) gibt; und
einen elastischen Stopper (13), der am Ende der Hilfslängsträgerplatte (12) angeordnet ist und sich in dem Pufferspalt (14) befindet, wobei in dem Fall, in dem die Mitte des Längsträgers (1) eine erste vertikale Last trägt, ein Spalt zwischen dem elastischen Stopper (13) und der Oberseite der Hauptlängsträgerplatte (11) vorhanden ist, in dem Fall, in dem die Mitte des Längsträgers (1) eine zweite vertikale Last trägt, die Hauptlängsträgerplatte (11) und die Hilfslängsträgerplatte (12) eine elastische Verformung aufweisen, bis der elastische Stopper (13) die Oberseite der Hauptlängsträgerplatte (11) berührt, und die zweite vertikale Last größer ist als die erste vertikale Last; wobei die erste vertikale Last und die zweite vertikale Last von der Hilfslängsträgerplatte (12) ausgehen, um nach unten zu drücken.

4. Drehgestellrahmen nach Anspruch 1, wobei die Querträger-Einzelstruktur aufweist:
einen Querträgerhauptkörper (21), wobei die innere Endfläche des Querträgerhauptkörpers (21), die einer anderen Querträger-Einzelstruktur zugewandt ist, einen ersten Montagebereich und einen zweiten Montagebereich aufweist, wobei die mittlere Oberseite des Querträgerhauptkörpers (21) mit einer Längsträgermontageschnittstelle zum Zusammenbau mit dem Längsträger (1) des Drehgestellrahmens versehen ist;
einen Querträgerverbindungsarm (22), der sich in einer Richtung parallel zum Querträgerhauptkörper (21) erstreckt, wobei ein Ende des Querträgerverbindungsarms (22) am ersten Montagebereich des Querträgerhauptkörpers (21) befestigt ist und das andere Ende des Querträgerverbindungsarms (22) an dem zweiten Montagebereich des Querträgerhauptkörpers (21) einer anderen Querträger-Einzelstruktur durch eine Querträgerverbindungsvorrichtung verbunden ist.

5. Drehgestellrahmen nach Anspruch 4, wobei die Breite des Endes des Querträgerhauptkörpers (21), das der anderen Querträger-Einzelstruktur zugewandt ist, größer ist als die Breite der Mitte des Querträgerhauptkörpers (21), der erste Montagebereich und der zweite Montagebereich jeweils an zwei Enden der inneren Endfläche des Querträgerhauptkörpers (21) entlang der Breitenrichtung angeordnet sind; und ein Spalt zwischen den beiden Querträgerverbindungsarmen (22) zur Aufnahme des Zugmittelstifts des Drehgestellrahmens ausgebildet ist.

6. Drehgestellrahmen nach Anspruch 1, wobei die Zugvorrichtung aufweist:
einen Zugmittelstift (6) mit einem Mittelstifthauptkörper (61), der in einen Montageraum zwischen den beiden Querträger-Einzelstrukturen eingesetzt ist;
einen Längsanschlag (65), der zwischen der Querträger-Einzelstruktur und dem Mittelstifthauptkörper (61) angeordnet ist; und
eine Hebevorrichtung (64), die am unteren Ende des Mittelstifthauptkörpers (61) angeordnet ist.

7. Drehgestellrahmen nach Anspruch 6, wobei die Hebevorrichtung (64) aufweist:
einen Hebemontagehauptkörper (641), der mit dem Mittelstifthauptkörper (61) verbunden ist, wobei in einer Richtung senkrecht zur axialen Richtung des Mittelstifthauptkörpers (61) zwei entsprechende Enden des Hebemontagehauptkörpers (641) jeweils aus dem Mittelstifthauptkörper (61) herausragen;
einen Hebestopperblock (642), der an zwei entsprechenden Enden des Hebemontagehauptkörpers (641) angeordnet ist, wobei der Hebestopperblock (642) verwendet wird, um während des Anhebens des Zugmittelstifts (6) an dem Querträger (2) anzuliegen.

8. Drehgestellrahmen nach Anspruch 7, der ferner aufweist: einen Querschwingungsdämpfer (98) und einen ersten Befestigungsbolzen (94);
wobei der Zugmittelstift (6) zwei entsprechend angeordnete Montagearme (62) aufweist, das Ende des Querschwingungsdämpfers (98) zwischen den beiden entsprechenden Montagearmen (62) montiert ist, die Montagearme (62) mit Montagelöchern versehen sind, der Zugmittelstift (6) mit einer teilweise ebenen Begrenzungsfläche (63) versehen ist;
wobei der erste Befestigungsbolzen (94) mit einer ersten Schraube (943) und einem ersten Bolzenkopf (941) versehen ist, der an einem Ende der ersten Schraube (943) angeordnet ist, wobei die erste Schraube (943) mit dem Montageloch und dem Bolzenloch zusammenpasst und die Seitenebene des ersten Bolzenkopfes (941) an der Begrenzungsfläche (63) anliegt.

9. Drehgestellrahmen nach Anspruch 1, der ferner aufweist: einen vertikalen Schwingungsdämpfer (93) und einen zweiten Befestigungsbolzen (99);
wobei die Querträger-Einzelstruktur mit einer vertikalen Schwingungsdämpfer-Montagelasche (214) versehen ist, die ein Befestigungsloch und eine teilweise ebene Begrenzungsfläche aufweist;
wobei der zweite Befestigungsbolzen (99) mit einer zweiten Schraube (993) und einem zweiten Bolzenkopf (991) versehen ist, der an einem Ende der zweiten Schraube (993) angeordnet ist, die zweite Schraube (993) durch das Montageloch und das Bolzenloch angeordnet ist und die Seitenebene des zweiten Bolzenkopfes (991) an der Begrenzungsfläche anliegt.

10. Drehgestellrahmen nach Anspruch 2, der ferner aufweist:
ein Dichtungslager (333), das zwischen der Welle (31) und dem Wellenkasten (33) angeordnet ist;
einen staubdichten Haltering (925), wobei ein Ende des staubdichten Halterings (925) mit dem Dichtungslager (333) verbunden ist und das andere Ende des staubdichten Halterings (925) mit einer Endkappe (912) des Direktantriebsmotors (91) verbunden ist, um eine Labyrinthdichtung mit der Endkappe (912) zu bilden.

11. Drehgestellrahmen nach Anspruch 10, wobei der staubdichte Haltering (925) aufweist:
einen Montagekörper (931), dessen Kopfende zwischen dem Dichtungslager (333) und der Welle (31) angeordnet ist und dessen Schwanzende zwischen der Endkappe (912) und der Welle (31) angeordnet ist;
einen Verlängerungsring (932), der am hinteren Ende des Montagekörpers (931) vorgesehen ist und sich innerhalb der Endkappe (912) entfernt vom Wellenkasten (33) befindet; und
eine Vielzahl von ringförmigen Dichtungszahnrädern (933), die auf einer Seite des Verlängerungsrings (932) vorgesehen sind, die der inneren Seitenwand der Endkappe (912) zugewandt ist, und die jeweils mit den Spalten zusammenwirken, die an der inneren Seitenwand der Endkappe (912) vorgesehen sind, um eine Labyrinthdichtung zwischen der Endkappe (912) und dem staubdichten Haltering (925) zu bilden.

12. Drehgestellrahmen nach Anspruch 2, der ferner aufweist:
ein Motorausgleichsglied (92), wobei ein Ende des Motorausgleichsglieds (92) flexibel mit dem Direktantriebsmotor (91) verbunden ist und das andere Ende flexibel mit dem Sekundäraufhängungsmontagesitz (8) verbunden ist.

13. Drehgestellrahmen nach Anspruch 12, wobei das Motorausgleichsglied (92) aufweist: einen Gliedkörper (921) und zwei elastische Gelenke (922), wobei zwei elastische Gelenke (922) jeweils an zwei Enden des Gliedkörpers (921) angeordnet sind, wobei ein elastisches Gelenk (922) mit einem Stator (911) des Direktantriebsmotors (91) verbunden ist und das andere elastische Gelenk (922) mit dem Sekundäraufhängungsmontagesitz (8) verbunden ist; wobei ein Metallhaltering (923) in das Ende des Gelenkkörpers (921) eingebettet ist und ein Montageloch zur Montage der elastischen Gelenke (922) aufweist.

14. Drehgestellrahmen nach Anspruch 9, wobei die vertikale Schwingungsdämpferbefestigungslasche (214) zur Verbindung mit dem vertikalen Schwingungsdämpfer (93) an der Seitenfläche des Querträgerhauptkörpers (21) vorgesehen ist.

15. Schienenfahrzeug, das aufweist: einen Drehgestellrahmen nach einem der Ansprüche 1 bis 14.

## Revendications

1. Châssis de bogie, comprenant :
une traverse (2), s'étendant transversalement et comprenant deux mono-structures de traverse disposées symétriquement et reliées l'une à l'autre et formant un espace de montage de dispositif de traction entre les deux mono-structures de traverse ;
deux sièges de montage de suspension secondaire (8), disposés symétriquement sur la surface supérieure de la traverse (2) ;
deux longerons (1), s'étendant selon une direction longitudinale, les deux longerons (1) étant disposés côte à côte ;
un essieu monté (3), disposé symétriquement au-dessous du longeron (1) et comprenant un arbre (31), des roues (32) disposées symétriquement sur l'arbre (31), et des boîtes d'essieu (33) disposées symétriquement sur l'arbre (31) ;
un dispositif de suspension primaire (4), disposé entre le longeron (1) et la boîte d'essieu (33) ;
un dispositif de suspension secondaire, disposé sur le siège de montage de suspension secondaire (8) ;
un dispositif de traction, dont l'extrémité inférieure est insérée dans l'espace de montage de dispositif de traction entre les deux mono-structures de traverse ; et
un dispositif de frein, disposé sur la traverse (2) et configuré pour appliquer une opération de freinage sur les roues (32) ;
**caractérisé en ce que**
deux canaux de montage traversant selon la direction longitudinale sont formés entre les sièges de montage de suspension secondaire (8) et la traverse (2), la direction longitudinale et une direction transversale sont deux directions horizontales perpendiculaires l'une à l'autre, et chacun des longerons (1) est disposé dans l'un des canaux de montage.

2. Châssis de bogie selon la revendication 1, comprenant en outre :
un moteur à entraînement direct (91), relié entre la boîte d'essieu (33) et le siège de montage de suspension secondaire (8), dans lequel un rotor (913) du moteur à entraînement direct (91) est relié de manière fixe à l'arbre (31) et tourne de manière synchrone.

3. Châssis de bogie selon la revendication 1, dans lequel le longeron (1) comprend :
une plaque de longeron principale (11), réalisée en matériau composite à fibres élastiques ;
une plaque de longeron auxiliaire (12), réalisée en matériau composite à fibres élastiques et empilée au-dessus de la plaque de longeron principale (11), la surface inférieure médiane de la plaque de longeron auxiliaire (12) étant en contact avec la surface supérieure de la plaque de longeron principale (11), et il existe un espace tampon (14) entre les surfaces inférieures des deux extrémités de la plaque de longeron auxiliaire (12) et la surface supérieure de la plaque de longeron principale (11) ; et
une butée élastique (13), disposée à l'extrémité de la plaque de longeron auxiliaire (12) et située dans l'espace tampon (14), dans lequel, lorsque le milieu du longeron (1) supporte une première charge verticale, il existe un espace entre la butée élastique (13) et la surface supérieure de la plaque de longeron principale (11), lorsque le milieu du longeron (1) supporte une seconde charge verticale, la plaque de longeron principale (11) et la plaque de longeron auxiliaire (12) subissent une déformation élastique jusqu'à ce que la butée élastique (13) entre en contact avec la surface supérieure de la plaque de longeron principale (11), et la seconde charge verticale est supérieure à la première charge verticale ; dans lequel la première charge verticale et la seconde charge verticale sont des charges exercées par la plaque de longeron auxiliaire (12) vers le bas.

4. Châssis de bogie selon la revendication 1, dans lequel la mono-structure de traverse comprend :
un corps principal de traverse (21), dans lequel la surface d'extrémité intérieure du corps principal de traverse (21) faisant face à une autre mono-structure de traverse présente une première zone de montage et une seconde zone de montage, la surface supérieure médiane du corps principal de traverse (21) est pourvue d'une interface de montage de longeron pour l'assemblage avec le longeron (1) du châssis de bogie ;
un bras de connexion de traverse (22), s'étendant dans une direction parallèle au corps principal de traverse (21), dans lequel une extrémité du bras de connexion de traverse (22) est fixée à la première zone de montage du corps principal de traverse (21), et l'autre extrémité du bras de connexion de traverse (22) est reliée à la seconde zone de montage du corps principal de traverse (21) d'une autre mono-structure de traverse par un dispositif de connexion de traverse.

5. Châssis de bogie selon la revendication 4, dans lequel la largeur de l'extrémité du corps principal de traverse (21) faisant face à l'autre mono-structure de traverse est supérieure à la largeur du milieu du corps principal de traverse (21), la première zone de montage et la seconde zone de montage sont respectivement situées aux deux extrémités de la surface d'extrémité intérieure du corps principal de traverse (21) selon la direction de la largeur ; et un espace est formé entre les deux bras de connexion de traverse (22) pour recevoir le pivot central de traction du châssis de bogie.

6. Châssis de bogie selon la revendication 1, dans lequel le dispositif de traction comprend :
un pivot central de traction (6) ayant un corps principal de pivot central (61) inséré dans un espace de montage entre les deux mono-structures de traverse ;
une butée longitudinale (65), disposée entre la mono-structure de traverse et le corps principal du pivot central (61) ; et
un dispositif de levage (64), disposé à l'extrémité inférieure du corps principal du pivot central (61).

7. Châssis de bogie selon la revendication 6, dans lequel le dispositif de levage (64) comprend :
un corps principal de montage de levage (641) relié au corps principal du pivot central (61), dans lequel, dans une direction perpendiculaire à la direction axiale du corps principal du pivot central (61), deux extrémités correspondantes du corps principal de montage de levage (641) s'étendent respectivement hors du corps principal du pivot central (61) ;
un bloc d'arrêt de levage (642), disposé aux deux extrémités correspondantes du corps principal de montage de levage (641), dans lequel le bloc d'arrêt de levage (642) est configuré pour venir en butée contre la traverse (2) lors du levage du pivot central de traction (6).

8. Châssis de bogie selon la revendication 7, comprenant en outre : un amortisseur de vibrations transversales (98) et un premier boulon de fixation (94) ;
dans lequel le pivot central de traction (6) comporte deux bras de montage (62) disposés de manière correspondante, l'extrémité de l'amortisseur de vibrations transversales (98) est montée entre les deux bras de montage (62) correspondants, les bras de montage (62) sont pourvus de trous de montage, le pivot central de traction (6) est pourvu d'une surface de limitation (63) partiellement plane ;
dans lequel le premier boulon de fixation (94) est pourvu d'une première vis (943) et d'une première tête de boulon (941) disposée à une extrémité de la première vis (943), la première vis (943) est adaptée au trou de montage et au trou de boulon, et le plan latéral de la première tête de boulon (941) est en butée contre la surface de limitation (63).

9. Châssis de bogie selon la revendication 1, comprenant en outre : un amortisseur de vibrations verticales (93) et un second boulon de fixation (99) ;
dans lequel la mono-structure de traverse est pourvue d'une patte de montage d'amortisseur de vibrations verticales (214) pourvue d'un trou de montage et d'une surface de limitation partiellement plane ;
dans lequel le second boulon de fixation (99) est pourvu d'une seconde vis (993) et d'une seconde tête de boulon (991) disposée à une extrémité de la seconde vis (993), la seconde vis (993) est disposée à travers le trou de montage et le trou de boulon, et le plan latéral de la seconde tête de boulon (991) est en butée contre la surface de limitation.

10. Châssis de bogie selon la revendication 2, comprenant en outre :
un palier d'étanchéité (333), disposé entre l'arbre (31) et la boîte d'essieu (33) ;
une bague de retenue anti-poussière (925), dont une extrémité est reliée au palier d'étanchéité (333), l'autre extrémité de la bague de retenue anti-poussière (925) étant reliée à un capot d'extrémité (912) du moteur à entraînement direct (91) pour former un joint labyrinthe avec le capot d'extrémité (912).

11. Châssis de bogie selon la revendication 10, dans lequel la bague de retenue anti-poussière (925) comprend :
un corps de montage (931), dont l'extrémité avant est disposée entre le palier d'étanchéité (333) et l'arbre (31), et dont l'extrémité arrière est disposée entre le capot d'extrémité (912) et l'arbre (31) ;
une bague d'extension (932), prévue à l'extrémité arrière du corps de montage (931) et située à l'intérieur du capot d'extrémité (912) du côté opposé à la boîte d'essieu (33) ; et
une pluralité de dentures d'étanchéité annulaires (933), prévues sur un côté de la bague d'extension (932) faisant face à la paroi intérieure du capot d'extrémité (912), et coopérant respectivement avec les rainures prévues sur la paroi intérieure du capot d'extrémité (912), de manière à former un joint labyrinthe entre le capot d'extrémité (912) et la bague de retenue anti-poussière (925).

12. Châssis de bogie selon la revendication 2, comprenant en outre :
une biellette d'équilibrage de moteur (92), dont une extrémité est reliée de manière flexible au moteur à entraînement direct (91) et dont l'autre extrémité est reliée de manière flexible au siège de montage de suspension secondaire (8).

13. Châssis de bogie selon la revendication 12, dans lequel la biellette d'équilibrage de moteur (92) comprend : un corps de biellette (921) et deux articulations élastiques (922), les deux articulations élastiques (922) étant respectivement disposées aux deux extrémités du corps de biellette (921), une articulation élastique (922) est reliée à un stator (911) du moteur à entraînement direct (91), et l'autre articulation élastique (922) est reliée au siège de montage de suspension secondaire (8) ;
dans lequel une bague de retenue métallique (923) est noyée dans l'extrémité du corps de biellette (921) et comporte un trou de montage pour le montage des articulations élastiques (922).

14. Châssis de bogie selon la revendication 9, dans lequel la patte de montage d'amortisseur de vibrations verticales (214) pour la connexion avec l'amortisseur de vibrations verticales (93) est prévue sur la surface latérale du corps principal de traverse (21).

15. Véhicule ferroviaire comprenant : un châssis de bogie selon l'une quelconque des revendications 1 à 14.
